Europäisches Patentamt

European Patent Office

Office européen des brevets

(19)

(11) Publication number: **0 228 242**
**A2**

(12) **EUROPEAN PATENT APPLICATION**

(21) Application number: 86309830.7

(51) Int. Cl.⁴: **G06F 11/34**

(22) Date of filing: **16.12.86**

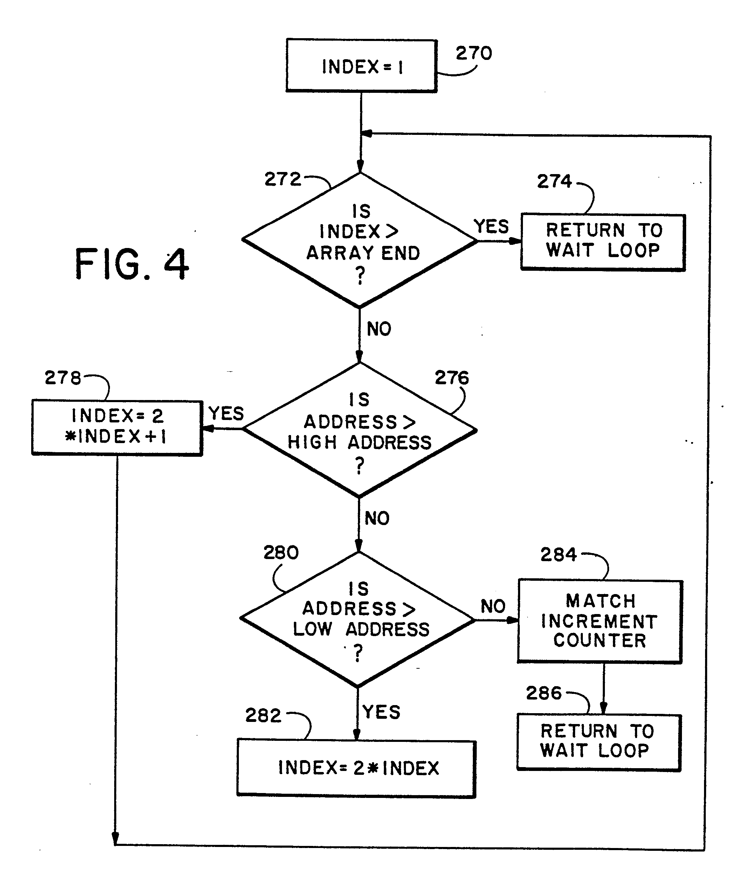

A request for correction of Fig. 4 has been filed pursuant to Rule 88 EPC. A decision on the request will be taken during the proceedings before the Examining Division (Guidelines for Examination in the EPO, A-V, 2.2).

(30) Priority: **23.12.85 US 812085**

(43) Date of publication of application:
**08.07.87 Bulletin 87/28**

(84) Designated Contracting States:
**DE FR GB IT NL**

(71) Applicant: **TEKTRONIX, INC.**
**Tektronix Industrial Park D/S Y3-121 4900**
**S.W. Griffith Drive P.O. Box 500**
**Beaverton Oregon 97077(US)**

(72) Inventor: **Clark, Jeffery J.**
**P.O. Box 1525**
**Beaverton Oregon 97075(US)**
Inventor: **Schultheis, Stephen A.**
**Route 2, Box 1047**
**Hillsboro Oregon 97123(US)**

(74) Representative: **Burke, Steven David et al**
**R.G.C. Jenkins & Co. 12-15, Fetter Lane**
**London EC4A 1PL(GB)**

(54) **Non-intrusive microprocessor performance analyzer.**

(57) A set of addresses contained within an address space of an analyzed processor are selected for monitoring according to qualification criteria. Thereafter, address information is placed in a data structure within a control device. Control information from the analyzed processor is monitored and compared against the qualification criteria, and responsive to control information from the analyzed processor agreeing with the qualification criteria, information concurrently present on an address port of the analyzed processor is placed in a temporary storage device. Placement of information in the temporary storage device operates to replace information previously stored therein. A timing device functions to produce indications at regular intervals of time, asychronous with the operation of the analyzed processor. The control device functions, responsive to the indications produced by the timing device, to read the information present in the temporary storage device, compare said information against the set of addresses, and count the number of times the information read from the temporary storage device agrees with information contained within the set of addresses. A count is also maintained of the total number of times information is read from the temporary storage device.

FIG. IA

FIG. IB

FIG. IC

## NON-INTRUSIVE MICROPROCESSOR PERFORMANCE ANALYZER

### BACKGROUND

This invention relates to monitoring devices, and more particularly to a method and apparatus for monitoring the operation of a processor without interrupting or altering the normal real-time functions, behavior or operational environment associated therewith.

Broadly speaking, a processor operates by sequentially performing a set of instructions, generally referred to as a program. The program is designed to accomplish an objective, and may reference additional information, generally referred to as data, in accomplishing the objective.

A processor may be considered as fundamentally comprising a central processing unit and a memory unit. The central processing unit basically performs desired operations pursuant to the program and data which are stored in the associated memory unit. Typically the memory unit is comprised of many sequential unique storage locations, each of which is capable of storing a unit of information. In this regard, it should be particularly noted that the units of information stored in the memory may be either instructions to direct the operations of the central processing unit, i.e., the program, or data which will be operated upon by the central processsing unit pursuant to the instructions.

As processors and the associated programs are complex devices, it is frequently desirable to monitor the operations of a processor, especially during the design and development of apparatus employing a processor, or the design and development of assciated programs. This has been accomplished in a number of ways.

In the past when central processing units were fabricated using discrete components, the contents of various registers and the status of various operations which occurred internal to the central processing unit were typically displayed by a collection of indicating devices. In some designs, each indicating device was permanently associated with a particular functional part within the central processor, and would continuously display the associated information. This frequently resulted in a large collection of indicating devices of various types. Such an approach frequently further included additional monitoring apparatus, such as instruction execution control devices. Such devices operated to provide such functions as controlling the rate at which the central processing unit performed the execution of individual instructions in a program, or halting the execution of instructions upon the occurrence of predefined conditions. When it was desirable to study a particular internal operation of a central processing unit not available through dedicated monitoring devices, specialized monitoring equipment was attached to selected points within the central processing unit. By way of example, if an analysis of the performance of a central processing unit in the execution of a particular program was of interest, the details of the particular program and associated parts of the central processing unit would be closely examined. In particular, the information of interest with respect to the program would first be determined. Thereafter, the associated apparatus within the central processor would be determined by a close examination of the internal architecture and operation of the central processing unit to determine the appropriate signals within the central processing unit which would contain the information of interest. Thereafter, signal probes would be attached to appropriate points within the internal circuity of the central processing unit to monitor the particular signals of interest. With the signal probes in place, the program of interest would then be run, and the information of interest collected. The information received via the signal probes would then be processed according the requirements of the monitoring task, and recorded for subsequent analysis. By employing such an approach, the desired details with respect to the operational characteristics of the central processing unit in the performance of a particular program could be determined.

Approaches employing dedicated indicating and monitoring devices offer a number of advantages, the most significant of which provides the capability of monitoring the operation of a central processing unit without disturbing the environment in which a program may be executing. However, with the advent of the fabrication of central processing units as integrated circuits, and the accompanying limitations associated with integrated circuit packaging techniques, it has not been possible to use dedicated indicating and monitoring devices to monitor the internal operation of a central processing unit fabricated as an integrated circuit. This limitation primarily results from the physical constraint of being unable to route the large number of electrical conductors necessarily associated with dedicated indicating devices out · of the integrated circuit package. With advances in the design of central processing units, the physical limitations imposed by integrated circuit packaging techniques have become even more limiting, and in some applications have operated to require multiplexing techniques to make the necessary signals available. This situation naturally makes the monitoring of the activities which occur internal to the central processing unit accordingly more difficult.

In response to the limitations imposed by integrated circuit packaging techniques, and the desire to monitor operations of a central processing unit, a number of alternate approaches have been taken. One such approach has been based upon programming, or software techniques, and a second approach has been based upon hardware techniques.

In the software, or programming technique, the central processing unit has been used to monitor itself. In such an approach, a program is entered on a periodic basis to tabulate the current execution state of a machine. Broadly stated, in such an approach, the machine not only operates to execute a program of interest, but also to perform monitoring functions associated therewith. Such an approach is frequently based upon techinques which include monitoring the status of the time allocated to execution of the program of interest by an associated operating system.

However, notwithstanding the advantages presented by using such programming or software techniques, such an approach has an inherent shortcoming fundamental to the process. In particular, the basic environment existing during the execution of program instructions is disturbed. This follows from the fact that the central processing unit must not only execute the program of interest, but must also execute the monitor program. By so executing the monitor program, the central processing unit is performing tasks that it otherwise would not do if it were executing the program alone. Such a shortcoming can present disadvantages of varying scope. One such disadvantage is in the time required for the execution of the program of interest. Since the central processing unit is having to execute both the program of interest as well as the monitor program, additional execution time is clearly required. While this may be acceptable under some conditions, it can be most undesirable under others. In particular, in an application in which it is desired to monitor an environment wherein the central processing unit must not only execute a program of interest, but must also respond to events which are occurring external to the central processing unit, the imposing upon the central processing unit of the additional task of executing the monitor program can significantly alter the basic environment which is desired to be monitored. This result follows from the fact that the time which the central processing unit would otherwise dedicate to the program of interest and responding to events which are occurring external to the central processing unit is reduced by the amount of time required by the central processor to perform the appropriate portions of the monitor program. Consequently such an approach has the serious shortcoming of disturbing the environment which is desired to be monitored.

Hardware monitoring techniques are generally based upon the monitoring of the signals produced by a central processing unit. Broadly speaking, the signals associated with a central processing unit fabricated as an integrated circuit can be classified into three groups: control signals, address signals and data signals. These signals function to electrically interface the central processing unit with the components associated therewith. Consequently, monitoring these signals can provide some indication of the operations occurring within the central processor unit.

In one approach, the address signals from the central processing unit are segregated into two groups, and each address signal present within each group is assigned a particular binary weight. Thereafter, a corresponding analog signal is derived for each of the signal groups having a magnitude proportional to the binary weight of the signal present on the address lines within each of the two groups. This is generally accomplished through the use of digital-to-analog converter devices. Thereafter, the two analog output signals are used to control the horizontal and vertical deflection plates of an oscilloscope. The resulting display on the oscilloscope will consequently provide some information with respect to the location in memory wherein the central processing unit is currently active. While such an approach does offer the advantage of not disturbing the operational environment within the central processing unit, the information so provided with respect to the internal operation of the central processing unit is very limited.

More advanced hardware monitoring approaches are employed in logic analyzer type devices. In particular, signal probes associated with a logic analyzer are coupled to receive the signals produced by a microprocessor: the control signals, the address signals and the data signals. The logic analyzer then operates to monitor the foregoing signals. The information obtained from such monitoring process can be either recorded for subsequent analysis, or used to immediately identify selected conditions.

In one approach used with respect to logic analyzers, it is possible to use associated hardware word recognizers to respond to addresses within a given range. Each word recognizer would be associated with a user-selectable range of addresses. In addition, a counter associated with each word recognizer is used to count each time its word recognizer responds to an address within its range. In practice, each of the word recognizers would be programmed to respond to different ranges of addresses, and when monitoring the analyzed microprocessor, would increment associated counters upon recognition of a vaild address. At the conclusion of the measurement, the contents of the counters would be examined and the results presented to the users. The disadvantage of this method is that only a limited number of address ranges can be examined at one time, because additional hardware is required for each of the ranges.

The foregoing hardware examples are but a few of the approaches which have been employed in the past to gain insight on the operations of a central processing unit by monitoring the various signals associated therewith. It will be observed that while each approach shares the common advantage of not disturbing the operation of a program within the central processing unit, the information provided by the monitoring technique has been limited in varying respects, failing to provide comprehensive information relating to the operations of the central processing unit.

## SUMMARY OF THE INVENTION

In accordance with the method and apparatus of the present invention, a means is disclosed to analyze the performance of a microprocessor without interrupting or altering the normal real-time functions and behavior of the microprocessor. The analysis performed includes measuring the time spent in different parts of the microprocessor's address space, executing code and/or accessing data. The number of ranges within the microprocessor's address space that can be analyzed at one time is extremely large, allowing a one-pass characterization of total program execution on the microprocessor. The technique allows for total characterization of program execution over very long periods of time as well. In accordance with the present invention, a determination may also be made of the portions of a program where a microprocessor is spending most of its time.

In particular, the address space of the microprocessor to be analyzed is broken into ranges of addresses according to the requirement of a particular monitoring application. These ranges may be equal or unequal in length, and may be further comprised of a single location. A counter device is established for each of these ranges in the memory of an Analyzing Microprocessor. Each of the counter devices is initially set to zero. The total number of ranges of addresses is used to calculate a sample period. A timer device functions to interrupt the analyzing microprocessor each time the sample period expires. Address Latches are employed to acquire selected addresses accessed by the analyzed microprocessor according to pre-selected bus cycle types.

After necessary setup operations have been performed, the analyzed microprocessor is allowed to start execution of a program under test. Either concurrently therewith or subsequently thereto, the timer device starts timing the sample period, and the analyzing microprocessor goes into a wait loop. At the end of each sample period the timer device generates an interrupt to the analyzing microprocessor, and disables latching of any further addresses into the Address Latches. The analyzing microprocessor then reads the current contents of the Address Latches asynchronously with the analyzed microprocessor's bus cycle. An Arbiter device functions to ensure that the contents of the Address Latches are valid by disabling them from latching new input data during the time when they are being read by the analyzing microprocessor. When the contents of the last address latch has been read by the analyzing microprocessor, the latching function of the Address Latches is again enabled.

The address found in the Address Latches is thereafter compared by the analyzing microprocessor with pre-selected address ranges to determine the corresponding address range in which the address read from the latches is contained. If the address found in the Address Latches is contained within one of the pre-selected address ranges, then a count indication is produced, e.g., a counter device associated with the corresponding range is then incremented by one. In addition thereto, an additional count of the total number of times the latches have been read is likewise incremented. The analyzing microprocessor then returns to the wait loop until the timer device again interrupts.

When the analyzed microprocessor concludes execution of its program, or at a selected time prior thereto, the foregoing described information is analyzed. In particular, the total time of execution of the analyzed microprocessor is derived from the sample period and the total number of times a sample was taken. The time spent within each of the aforedescribed ranges of addresses is found as a function of the sample period, and the value determined by the counter device for that range. Percentages of time for each individual range are found as a function of the total number of samples taken and the value contained within the individual counter device. In addition, other statistical data can be further derived from the foregoing.

BRIEF DESCRIPTION OF THE DRAWINGS

Figures IA, IB and IC collectively illustrate a functional block diagram of monitoring apparatus in accordance with the method and apparatus of the present invention.

Figures 2A, 2B and 2C illustrate the function steps performed by Analyzing Microprocessor I50 - (Figure IC).

Figures 3A and 3B illustrate the time sequence of events which occur with respect to the operation of Analyzing Microprocessor I50 and the apparatus of Figures IA, IB and IC.

Figure 4 illustrates the functional steps performed by Analyzing Microprocessor I50 in the processing of information read from Latches 60, 70, 80, 90 and I00 (Figure IB).

DETAILED DESCRIPTION

In accordance with the present invention, a method and apparatus is disclosed which provides for the improved monitoring of the activities of a central processing unit. Apparatus operates to monitor information present on the address and control lines of a monitored microprocessor, hereinafter referred to as the analyzed microprocessor, and, in response to the information appearing thereon agreeing with pre-defined qualifying information, capturing said information. The captured information is subsequently analyzed to determine the activities of the analyzed microprocessor. In particular, individual and/or ranges of addresses contained within the address space of an analyzed microprocessor are first selected. In addition, qualification information is further selected with respect to the individual and/or ranges of addresses. Such qualification information could define particular types of operations, e.g., read operations or write operations. Thereafter, address and control information produced by the analyzed microprocessor in the execution of the program of interest is monitored. In response to the occurrence of control information in accordance with the previously selected qualification information, the corresponding address information produced by the analyzed microprocessor is temporarily stored. The storing of address information operates to replace any previously stored address information with the current address information. The stored address information is thereafter read on a regular basis, asychronous with the operation of the analyzed microprocessor. It should be observed that as the reading of the stored address information is on a regular basis, asychronous with the operation of the analyzed processor, it is probable that not all of the stored address information will in fact be read. Consequently, the address information which is read is considered statistical information, as more fully discussed hereafter. The information may be later processed in accordance with statistical techniques to determine operational information relating to the execution of the program by the analyzed microprocessor.

Figures IA, IB and IC collectively represent a functional block diagram of apparatus in accordance with the present invention. Referring first to Figure IA, Analyzed Microprocessor I0 broadly illustrates a microprocessor whose operations are desired to be monitored. Microprocessor I0 has associated therewith Data Port I2, Address Port I4, Control Port I6 and Address Space Output Port I8. Data Port I2 functions to provide a port through with data may be transferred between Analyzed Microprocessor I0 and apparatus associated therewith. Address Port I4 functions to provide a port for Analyzed Microprocessor I0 to indicate a desired address for an associated operation. Control Port I6 functions to provide a port for Analyzed Microprocessor I0 to both send and receive control information associated with the operation thereof. As will be more fully discussed hereinafter, Analyzed Microprocessor I0 may have further functional ports associated therewith onto which Microprocessor I0 may place additional information of interest. While such ports will vary among the different types of microprocessor devices, the function of such ports is broadly indicated in Figure IA by Address Space Outputs Port I8.

Qualification Logic 30 functions to compare two sets of information coupled thereto, and to provide an indication if the information contained within the two sets agree. Qualification Logic 30 has associated therewith Qualification Logic Input Ports 32, 34 and 36, and Qualification Logic Output Terminal 38. The information coupled to Qualification Logic Input Ports 32 and 34, collectively, comprises the first set of information, and information coupled to Qualification Logic Input Port 36 comprises the second set of information. Qualification Logic 30 compares the information from the first set of information, i.e., the information coupled to Qualification Logic Input Ports 32 and 34, with the information from the second set of information, i.e., the information coupled to Qualification Logic Input Port 36, and produces a single pulse on Qualification Logic Output Terminal 38 if the information contained within the two sets agrees. In a similar manner, when the information contained within the two sets of information does not agree, Qualification Logic 30 produces no pulse on Qualification Logic Output Terminal 38. While there are many ways in which the functions of Qualification Logic 30 may be implemented, Model I6L8A Integrated Circuits manufactured by Monolithic Memories, Inc. of Santa Clara, CA, and Model 74FI0 Integrated Circuits manufactured by Fairchild Instruments and Camera Corporation of Mountain View, CA are used in the preferred embodiment. The precise manner in which the foregoing described integrated circuits operate is more fully described in PAL Programmable Array Logic Handbook, Monolithic Memories, Inc., 1983, and Fairchild Advanced Schottky TTL FAST Data Book, Fairchild Instruments and Camera Corporation, 1984. The manner in which these integrated circuits are configured to perform the aforedescribed functions of Qualification Logic 30 would be apparent to one of ordinary skill in the art.

Qualification Logic Latch 40 functions to receive information defining selected qualification conditions, and to store said qualification conditions for subsequent use by Qualification Logic 30, as more fully discussed hereafter. Qualification Logic Latch 40 has associated therewith Qualification Logic Latch Input Port 42 and terminal 44, and Qualification Logic Latch Output Port 46. Qualification Logic Latch 40 operates pursuant to the presence of an enabling signal on Qualification Logic Latch Input Terminal 44 to store the information which is present coincident therewith at Qualification Logic Latch Input Port 42. The information present at Qualification Logic Latch Input Port 42 will thereafter be continuously coupled to Qualification Logic Latch Output Port 46. While there are many ways in which the functions of Qualification Logic Latch 40 may be implemented, Model 74LS652 Integrated Circuits manufactured by Texas Instruments, Inc., of Dallas Texas are used in the preferred embodiment. The precise manner in which the foregoing described integrated circuits operate is more fully described in The TTL Data Book, Volume 2, Standard TTL, Schottky and Low Power Schottky Circuits, Texas Instruments, Inc., 1985. The manner in which these integrated circuits are configured to perform the aforedescribed functions of Qualification Logic Latch 40 would be apparent to one of ordinary skill in the art.

Arbiter 50 functions to selectively couple information present on an input terminal associated therewith to a corresponding output terminal. Arbiter 50 has associated therewith Arbiter Input Terminal 52, Arbiter Disable Terminal 54, Arbiter Enable Terminal 56 and Arbiter Output Terminal 58. In response to the occurrence of a signal on Arbiter Enable Terminal 56, Arbiter 50 will thereafter couple information present on Arbiter Input Terminal 52 to Arbiter Output Terminal 58. In response to the occurrence of a signal on Arbiter Disable Terminal 54, Arbiter 50 will cease to couple information present on Arbiter Input Terminal 52 to Arbiter Output Terminal 58. While there are many ways in which the functions of Arbiter 50 may be implemented, Model 74F74, 74ALS677 and 74ALS32 Integrated Circuits manufactured by Texas Instruments of Dallas Texas, and Mooel 74F04 and 74F08 Integrated Circuits manufactured by Fairchild Instrument and Camera Corporation are used in the preferred embodiment. The precise manner in which the foregoing described integrated circuits operate is more fully described in The TTL Data Book, Vol 3, Advanced Low Power Schottky and Advanced Schottky, and Fairchild Advanced Schottky TTL FAST Data Book, previously referenced. The manner in which these integrated circuits are configured to perform the aforedescribed functions of Arbiter 50 would be apparent to one of ordinary skill in the art.

Referring now to Figure IB, Latch 60 functions to temporarily store information coupled thereto, and thereafter, pursuant to a request, to couple the information previously stored therein to an output port associated therewith. Latch 60 has associated therewith Latch Data Input Port 62, Latch Clock Terminal 64, Latch Output Enable Terminal 66 and Latch Data Output Port 68. Latch 60 functions responsive to a pulse present at Latch Clock Terminal 64 to store the information present at Latch Data Input Port 62. Latch 60 functions responsive to an enable signal on Latch Output Enable Terminal 66 to couple the information stored therein to Latch Data Output Port 68. In a similar manner, Latches 70, 80, 90 and I00 have associated therewith Latch Data Input Ports 72, 82, 92, and I02, respectively, Latch Clock Terminal 74, 84, 94, and I04, respectively, Latch Output Enable Terminals 76, 86, 96 and I06, respectively, and Latch Data Output Port 78, 88, 98 and I08, respectively. Latches 70, 80, 90 and I00 function in an identical manner as was previously described with respect to Latch 60. While there are many ways in which the functions of Latches 60, 70, 80, 90 and I00 may be implemented, Model 74F374 Integrated Circuits manufactured by Fairchild Camera and Instrument Corporation are used in the preferred embodiment. The precise manner in which the foregoing described integrated circuits operate is more fully described in Fairchild Advanced Schottky TTL FAST Data Book, previously referenced. The manner in which these integrated circuits are configured to perform the aforedescribed functions of Latches 60, 70, 80, 90 and I00 would be apparent to one of ordinary skill in the art.

Address Decode II0 functions to monitor information present on an address bus coupled thereto, and to produce individual signals in response to the occurrence of selected addresses on the address bus. Address Decode II0 has associated therewith Address Decode Output Terminals II2, II4, II6, II8, I20, I22, I24, I26, I28, I30 and I32, Address Decode Control Input Port I34 and Address Decode Address Input Port I36. Address Decode II0 monitors information present at Address Decode Address Input Port I36, and in

6

response to the occurrence of a selected address present at Address Decode Address Input Port 136, and corresponding control signals present at Address Decode Control Port Input 134, produces a corresponding signal on one of the associated Address Decode Output Terminals 112, 114, 116, 118, 120, 122, 124, 126, 128, 130 or 132. While there are many ways in which the functions of Address Decode 110 may be implemented, Model 16L8A Integrated Circuits manufactured by Monolithic Memories, Inc., Model 74LS259 Integrated Circuits manufactured by Texas Instruments, and Model 74F00, 74F10 and 74F138 Integrated Circuits manufactured by Fairchild Instruments and Camera Corporation are used in the preferred embodiment. The precise manner in which the foregoing described integrated circuits operate is more fully described in PAL Programmable Array Logic Handbook and Fairchild Advanced Schottky TTL FAST Data Book, previously referenced, and The TTL Data Book, Vol 2., Standard TTL, Schottky, and Low Power Schottky Circuits, Texas Instruments, 1985. The manner in which these integrated circuits are configured to perform the aforedescribed functions of Address Decode 110 would be apparent to one of ordinary skill in the art.

Timer 140 functions to provide a basic timing function. In particular, a selected period of time is first supplied to Timer 140. Thereafter, in response to a command to start, Timer 140 will begin the timing of the selected time period. At the expiration of the selected time period, Timer 140 will produce a signal indicating the expiration of the selected time period, and thereafter continuously repeat the process. Timer 140 will continue to function in this fashion until stopped by a command coupled thereto. Timer 140 has associated therewith Timer Data Port 142, Timer Load Terminal 144, Timer Read Terminal 146 and Timer Output Terminal 148. Functional commands, e.g. commands to begin timing of the selected time period or to stop the aforedescribed timing operation, as well as the aforedescribed period of time, are coupled to Timer 140 through Timer Data Port 142 coincident with an enabling signal on Timer Load Terminal 144. The time remaining within a time period may be determined by placing a signal on Timer Read Terminal 146 and sampling the data present at Timer Data Port 142. While there are many ways in which the functions of Timer 140 may be implemented, a Model 74LS593 Integrated Circuit manufactured by Texas Instruments, Inc. is used in the preferred embodiment. The precise manner in which the foregoing described integrated circuit operates is more fully described in The TTL Data Book, Vol 2., Standard TTL, Schottky, and Low Power Schottky Circuits, Texas Instruments, 1985, previously referenced..

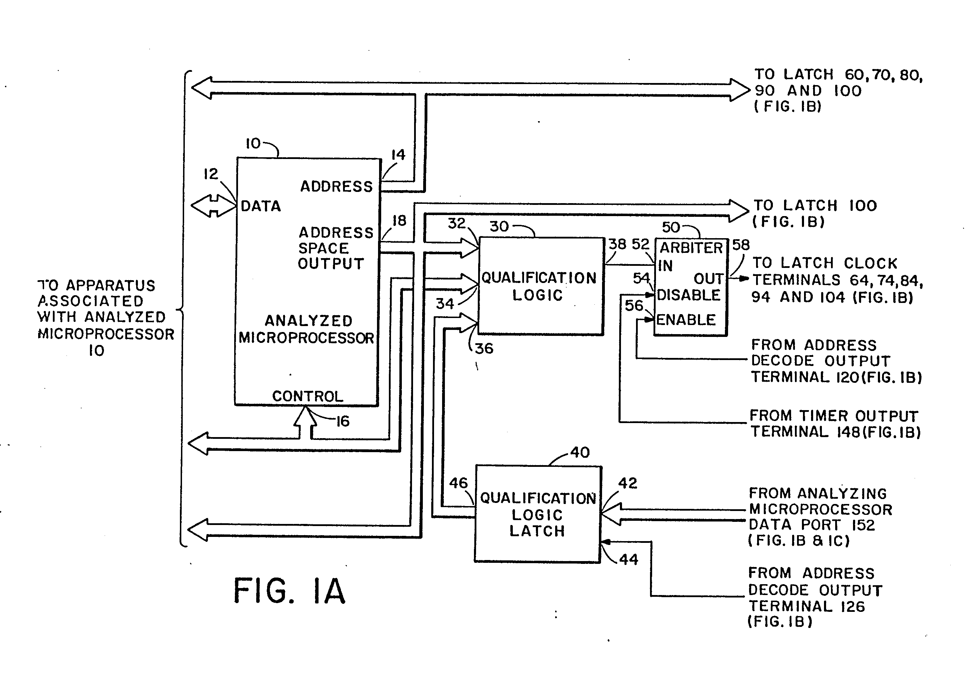

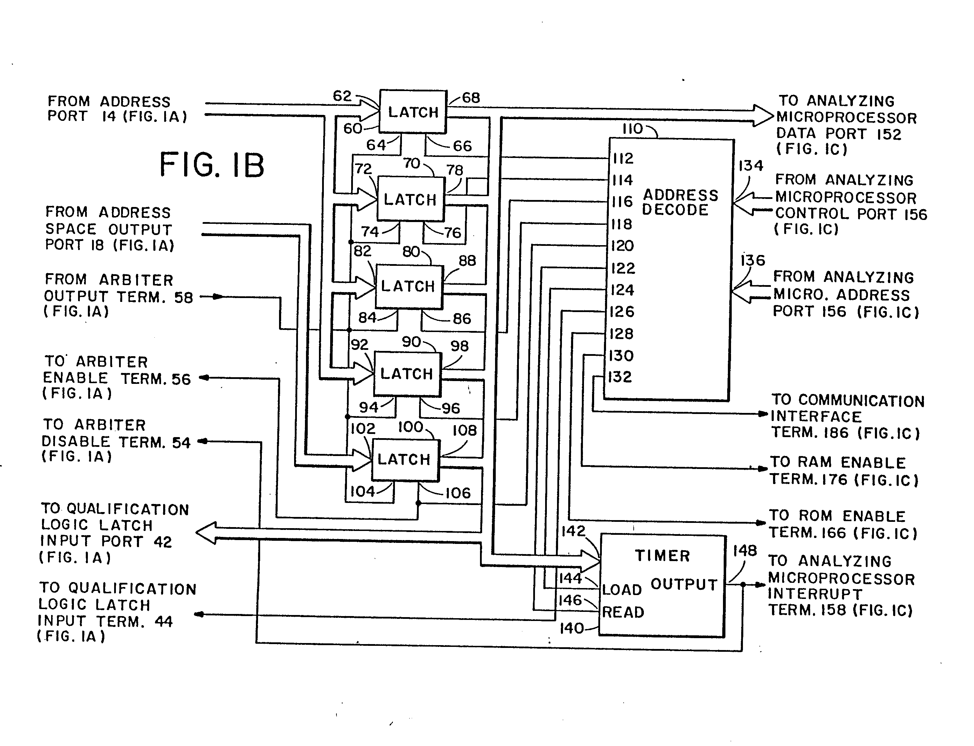

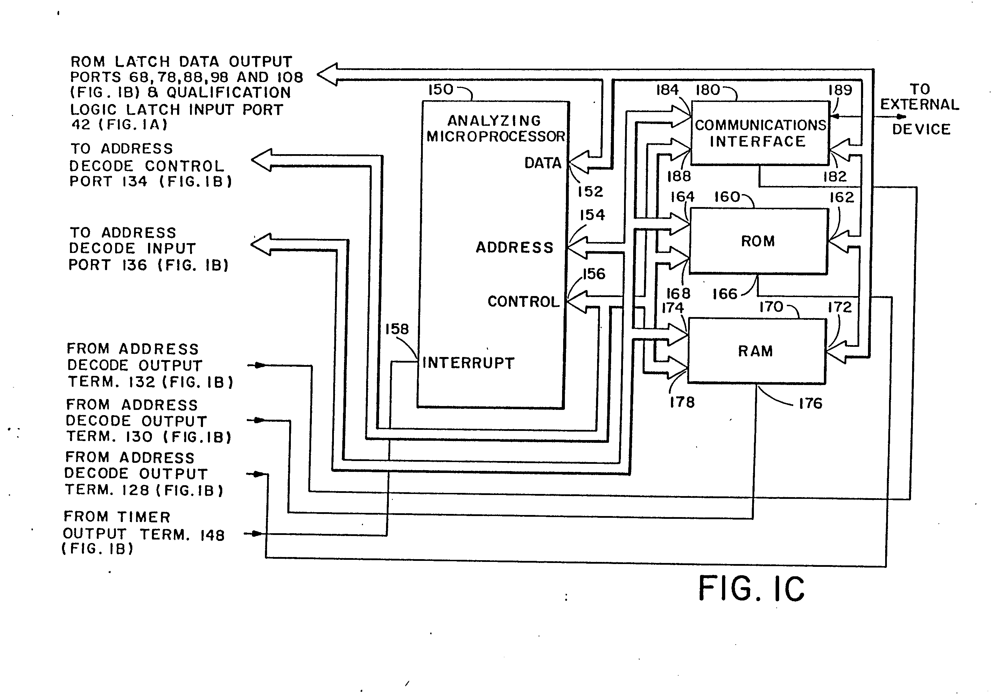

Referring now to Figure 1C, Analyzing Microprocessor 150 functions to orchestrate the operations of the apparatus associated therewith in the monitoring of the activities of Analyzed Microprocessor 10 (Figure 1A). Analyzing Microprocessor 150 has associated therewith Data Port 152, Address Port 154, Control Port 156 and Interrupt Terminal 158. Data Port 152 functions to provide a port through with data may be transferred between Analyzing Microprocessor 150 and apparatus associated therewith. Address Port 154 functions to provide a port for Analyzing Microprocessor 150 to indicate a desired address for an associated operation. Control Port 156 functions to provide a port for Analyzing Microprocessor 150 to both send and receive control information associated with an operation which it is performing. Interrupt Terminal 158 functions to provide a means of interrupting the operations of Analyzing Microprocessor 150 with a request to perform a particular operation. In particular, the presence of a signal on Interrupt Terminal 158 will result in Analyzing Microprocessor 10 completing the instruction which it is currently performing, and thereafter performing a desired sequence of instructions which function to accomplish a desired task, as will be more fully described hereinafter. While there are many ways in which the functions of Analyzing Microprocessor 150 may be implemented, a Model MC68008L8 microprocessor manufactured by Motorola Semiconductor Products, Inc. of Phoenix, AZ, is used in the preferred embodiment. The precise manner in which the Model MC68008L8 microprocessor operates is more fully described in MC68008 16Bit Microprocessor With 8 Bit Data Bus Advanced Information, Motorola, Inc., August 1983.

ROM 160 functions to provide information comprising a set of instructions which direct the operations of Analyzing Microprocessor 150. ROM 160 has ROM Data Port 162, ROM Address Port 164, ROM Enable Terminal 166 and ROM Control Port 168 associated therewith. In response to the presence of an enable signal on ROM Enable Terminal 166, a control signal at ROM Control Port 168 and a corresponding address at ROM Address Port 164, ROM 160 functions to produce at ROM Data Port 162 the corresponding information stored at the location specified by the address at ROM Address Port 164. The set of instructions which are stored in ROM 160 are described in more detail hereafter. While there are many ways in which the functions of ROM 160 may be implemented, Model 27256 EPROM Integrated Circuits manufactured by Intel Corporation of Santa Clara, CA are used in the preferred embodiment. The precise manner in which the referenced integrated circuits operate is more fully described in Memory Components Handbook, Intel Corporation, 1985.

RAM 170 functions to provide for the temporary storage of information, i.e., to store information supplied thereto and subsequently to reproduce information previously stored therein. RAM 170 has associated therewith RAM Data Port 172, RAM Address Port 174, RAM Enable Terminal 176 and RAM Control Port 178. In response to the presence of an enable signal on RAM Enable Terminal 176 and a control signal at RAM Control Port 178, RAM 170 functions to either store information which is present at RAM Data Port 172 within RAM 170 at the address which is present at RAM Address Port 174, or to extract information previously stored within RAM 170 at the address which is currently present at RAM Address Port 174, and transfer said information to RAM Data Port 172, as determined by the associated control signal placed at RAM Control Port 178. While there are many ways in which the functions of RAM 170 may be implemented, Model MMI256 Integrated Circuits manufactured by NEC Electronics Inc. of Mountain View, CA, are used in the preferred embodiment. The precise manner in which the referenced integrated circuits operate is more fully described in Memory Products 1985 Data Book, NEC Electronics Inc., 1985. The manner in which said integrated circuits would be configured would be apparent to one of ordinary skill in the art.

Communications Interface 180 functions to provide for the transfer of information between Analyzing Microprocessor 150 and external apparatus which may desire to communicate therewith. Such external apparatus could include a wide variety of devices, including a terminal comprised of a display device and an accompanying keyboard, an information storage system, e.g., floppy or hard disk system, or a communication link to other information processing systems. Such types of external apparatus would depend upon the interfacing requirements of a particular application. Communications Interface 180 has associated therewith Communication Interface Data Port 182, Communications Interface Address Port 184, Communications Interface Enable Terminal 186 and Communications Interface Control Port 188. In response to the presence of an enable signal on Communications Enable Terminal 186 and a control signal at Communications Control Port 188, the Communications Interface 180 functions to either accept command information from Analyzing Microprocessor 150, or perform communication tasks, as defined by previous command information from Analyzing Microprocessor 150. While there are many ways in which the functions of Communications Interface 180 may be implemented, a Model 8251A Programmable Communications Interface Integrated Circuit manufactured by Intel Corporation is used in the preferred embodiment. The precise manner in which the Programmable Communications Interface operates is more fully described in Microsystems Components Handbook, Microprocessors and Peripherals, Intel Corporation, 1985. The manner in which the Programmable Communications Interface would be configured would be apparent to one of ordinary skill in the art.

The foregoing described apparatus is configured in the following manner. Referring to Figure IA, Data Port 12 of Microprocessor 10 is coupled to apparatus associated therewith (not shown). In a similar manner, Address Port 14, Control Port 16 and Address Space Output Port 18 are coupled to apparatus associated therewith (not shown). Such apparatus comprises other devices which are coupled to Analyzed Microprocessor 10, and consequently would vary with the particular system whose operations are desired to be monitored.

Address Port 14 of Microprocessor 10 is further coupled to Latch Data Input Port 62, 72, 82 and 92 of Latch 60, 70, 80 and 90 (Figure IB), respectively. It will be understood that the signals associated with Address Port 14 are typically divided into groups, with the signals comprising each group coupled to the individual latches, e.g., if each of Latch 60, 70, 80, 90 and 100 were capable of storing 8 bits of information, and there are a total of 32 signals associated with Address Terminal 14, address bits 0 through 7 would be coupled to Latch Data Input Port 62 of Latch 60, address bits 8 through 15 would be coupled to Latch Data Input Port 72 of Latch 70, address bits 16 through 23 would be coupled to Latch Data Input Port 82 of Latch 80 and address bits 24 through 31 coupled to Latch Data Input Port 92 of Latch 90. While a total of four latches, i.e., Latch 60, 70, 80 and 90, are illustrated in Figure IB, it is to be understood that the present invention is not to be considered as limited to thereto. Rather, in accordance with the method and apparatus of the present invention, the number of latches which may be employed may be either increased or decreased to accommodate the signals associated with Address Port 14 of Analyzed Microprocessor 10.

Control Port 16 of Analyzed Microprocessor 10 is further coupled to the Input Port 34 of Qualification Logic 30. The information from Control Port 16 comprises part of the information which Qualification Logic 30 will compare with the information coupled to Input Port 36, as more fully discussed hereafter.

Broadly speaking, Address Space Output Port 18 functions to provide a port for further control information from Analyzed Microprocessor 10. Such control information may include additional information relating to the address information present at Address Port 14: It should be understood that the presence of Address Space Output Port 18 will vary depending upon the particular type of microprocessor that is being monitored, i.e., not all types of microprocessor have such Address Space Output Ports associated therewith. Address Space Output Port 18, if present, is coupled to Qualification Logic Input Port 32, as well as to Latch Data Input Port 102 (Figure 1B).

Qualification Logic Input Port 32 and 34 are coupled to Address Space Output Port 18 and Control Port 16 of Analyzed Microprocessor 10, as previously discussed. Qualification Logic Input Port 36 is coupled to receive input data from Qualification Logic Latch Output Port 46. Qualification Logic Output Terminal 38 is coupled to Input Terminal 52 of Arbiter 50.

Input Terminal 52 of Arbiter 50 is coupled to Qualification Logic Output Terminal 38, as previously discussed. Arbiter Disable Terminal 54 is coupled to Output Terminal 148 of Timer 140 (Figure 1B). Arbiter Enable Terminal 56 is coupled to Address Decode Terminal 120 of Address Decode 110 (Figure 1B). Output Terminal 58 of Arbiter 50 is coupled to Latch Clock Terminals 64, 74, 84, 94 and 104 of Latchs 60, 70, 80, 90 and 100 (Figure 1B).

Input Port 42 of Qualification Logic Latch 40 is coupled to Analyzing Microprocessor Data Port 152 - (Figure 1B and 1C). Qualification Logic Latch Input Terminal 44 is coupled to Address Decode Output Terminal 126 of Address Decode 110 (Figure 1B). Qualification Logic Latch Output Port 46 is coupled to Qualification Logic Input Port 36, as previously discussed.

Referring again to Figure 1B, Latch Data Input Ports 62, 72, 82, and 92 of Latchs 60, 70, 80, and 90 are coupled to selected signals from Address Port 14 of Analyzed Microprocessor 10 (Figure 1A), as previously discussed. Latch Clock Terminals 64, 74, 84, 94 and 104 are coupled to Arbiter Output terminal 58 (Figure 1A), as previously discussed. Latch Data Output Ports 68, 78, 88, 98 and 108 are coupled to Analyzing Microprocessor Data Port 152 (Figure 1C). Latch Output Enable Terminals 66, 76, 86, 96 and 106 are coupled to Address Decode Output Terminals 112, 114, 116, 118 and 120, respectively. Address Decode Output Terminal 122 is coupled to Timer Read Terminal 146. Address Decode Output Terminal 124 is coupled to Timer Load Terminal 144. Address Decode Output Terminal 126 is coupled to Qualification Logic Latch Input Terminal 44 of Qualification Logic Latch 40 (Figure 1A), as previously discussed. Address Decode Output Terminal 128 is coupled to ROM Enable Terminal 166 (Figure 1C). Address Decode Output Terminal 130 is coupled to RAM Enable Terminal 176 (Figure 1C). Address Decode Control Port 134 is coupled to Analyzing Microprocessor Control Port 156 (Figure 1C). Address Decode Address Input Port 136 is coupled to Analyzing Microprocessor Address Port 154 (Figure 1C).

Timer Data Port 142 is coupled to Data Port 152 of Analyzing Microprocessor 150 (Figure 1C). Timer Read Terminal 144 and Timer Load Terminal 146 are coupled to Address Decode Output Terminals 122 and 124, respectively, as previously discussed. Timer Output Terminal 148 is coupled to Arbiter Disable Terminal 54 (Figure 1A), as previously discussed, as well as to Interrupt Terminal 158 of Analyzing Microprocessor 150 (Figure 1C).

Referring again to Figure 1C, Data Port 152 of Analyzing Microprocessor 150 is coupled to Latch Data Output Ports 68, 78, 88, 98 and 108 of Latches 60, 70, 80, 90 and 100, respectively (Figure 1B), to Timer Data Port 142 (Figure 1B), to Qualification Logic Latch Input Port 42 (Figure 1A), as previously discussed, to ROM Data Port 162 of ROM 160, to RAM Data Port 172 and to Communication Interface Data Terminal 182. Address Port 154 of Analyzing Microprocessor 150 is coupled to Address Decode Address Input Port 136 (Figure 1B), as previously discussed, to ROM Address Port 164, to RAM Address Terminal 174 and to Communication Interface ADdress Terminal 184: Control Port 156 of Analyzing Microprocessor 150 is coupled to Address Decode Control Port 134 (Figure 1B), as previously discussed, to ROM Control Port 168, to RAM Control Port 178 and to Communication Interface Control Port 188.

Broadly speaking, the foregoing described functional blocks operate in the following manner.

ROM 160 (Figure 1C) functions to permanently store instructions which comprise the program which directs the operations of Analyzing Microprocessor 150.

RAM 170 (Figure 1C) functions to provide for the temporary storage of information for Analyzing Microprocessor 150, including counters associated with each of the user-specified address ranges, as more fully discussed hereafter, and any other data storage Analyzing Microprocessor 150 may require.

Analyzing Microprocessor 150 (Figure 1C) receives instructions from ROM 160, and stores information temporarily in RAM 170. Prior to the monitoring of the operation of Analyzed Microprocessor 10 (Figure 1A), Analyzing Microprocessor 150 performs a number of initialization tasks, including the reading in of selected address and/or ranges of addresses through Communication Interface 180, and the storage of said information in RAM 170, initialization of user-selectable address ranges and their associated counters in

9

RAM I70, initialization of Timer I40, both for the desired timing function as well as for the desired time period, and initialization of Qualification Logic Latch 40. During the monitoring Process, Analyzing Microprocessor I50 sequentially reads the contents of Latchs 60, 70, 80, 90 and I00 for the addresses of memory locations accessed by Analyzed Microprocessor I0, and thereafter determines the corresponding counters in RAM I70 to increment, as more fully discussed hereafter. Input may also be received from a user in any of a wide variety of ways, such as a keyboard (not shown), through Communication Interface I80, in a manner well known to one of ordinary skill in the art.

Address Decoder II0 (Figure IB) functions to determine a unique address in the address space of Analyzing Microprocessor I50 for each of Latches 60, 70, 80, 90 and I00, ROM I60 (Figure IC), RAM I70 - (Figure IC), Communications Interface I80 (Figure IC), Timer I40 (Figure IB) and Qualification Logic Latch 40 (Figure IA), thereby enabling Analyzing Microprocessor I50 to individually access the various hardware blocks as necessary.

Qualification Logic Latch 40 (Figure IA) is used to store the selected bus-cycle type of Analyzed Microprocessor I0 during which addresses are to be stored in Latches 60, 70, 80, 90 and I00 (Figure IB). The information stored in Qualification Logic Latch 40 by Analyzing Microprocessor I50 may correspond to a single cycle type or set of cycle types of Analyzed Microprocessor I0, thereby restricting the storage of addresses in Latches 60, 70, 80, 90 and I00 to addresses of a selected cycle-type. By way of an illustrative example, Qualification Logic Latch 40 could be programmed by Analyzing Microprocessor I50 for a bus-cycle type corresponding to only Bus Fetches, thereby restricting the storage of addresses in Latches 60, 70, 80, 90 and I00 to addresses accessed by Analyzed Microprocessor I0 with a corresponding bus cycle of Bus Fetch.

During the monitoring of the operation of Analyzed Microprocessor I0, Qualification Logic 30 operates to compare the current stored cycle-type of Analyzed Microprocessor I0, as defined by the information present on Qualification Logic Input Ports 32 and 34, with the cycle-types stored in Qualification Logic Latch 40, as defined by the information present on Qualification Logic Input Port 36. If a match occurs, a pulse is produced by Qualification Logic 30, which functions to effect the storage of a new address into Latches 60, 70, 80, 90 and I00, subject to control of Arbiter 50.

Arbiter 50 functions to prevent conflicts between the storage of information into Latches 60, 70, 80, 90 and I00 and the reading of information therefrom by Analyzing Microprocessor I50, i.e., to prevent the changing of information in the latches during the reading of the contents thereof by Analyzing Microprocessor I50. During the monitoring of operations of Analyzed Microprocessor I0 by Analyzing Microprocessor I50, the indication produced by Qualification Logic 30 indicating a match functions to effect the storage of address information from Analyzed Microprocessor I0 as present at Address Port I4 into Latches 60, 70, 80, 90 and I00. However, responsive to a signal from Timer I40, no further information from Analyzed Microprocessor I0 is permitted to be stored in the latches until Analyzing Microprocessor I50 has read the contents of each of the Latches. Subsequent to the reading of the information from the latches by Microprocessor I50, Arbiter 50 thereafter functions to permit subsequent indications of a match to effect the storage of information from Analyzed Microprocessor I0 into Latches 60, 70, 80, 90 and I00.

Latches 60, 70, 80, 90 and I00 are the primary link between Analyzed Microprocessor I0 and Analyzing Microprocessor I50. The input Ports of Latches 60, 70, 80, 90 and I00 are coupled to address information produced by Analyzed Microprocessor I0. It should be understood with respect to the operation of Latches 60, 70, 80, 90 and I00, that the occurrence of a signal on Latch Clock Terminal 64, 74, 84, 94 or I04 operates to replace any information which may have previously been stored in the respective latch with information which is currently present at Latch Data Input Ports 62, 72, 82, 92 and I02, respectively. According to the method and apparatus of the present invention, the number of latches is determined by the particular type of microprocessor which is desired to be monitored, e.g., the particular type of device corresponding to Analyzed Microprocessor I0. The output ports of the latches are connected to the data bus of Analyzing Microprocessor I50. While the amount of information which can be stored by each of Latches 60, 70, 80, 90 and I00 will be determined by the particular type of devices chosen to implement each of said latches, in the preferred embodiment, each of Latches 60, 70, 80, 90 and I00 is capable of storing a single byte, i.e., 8 bits, of the address information.

Subsequent to initialization tasks, Analyzing Microprocessor I50 programs a value corresponding to a desired time interval between measurements into Timer I40. Thereafter, responsive to a command from Analyzing Microprocessor I50, Timer I40 begins counting, and the analysis of the performance of Analyzed Microprocessor I0 begins. When the time interval expires, Timer I40 generates an interrupt to Analyzing Microprocessor I50, reloads itself, and begins counting the desired time interval again. During the timing of the next interval, Analyzing Microprocessor I50 reads the information stored in each of Latches 60, 70, 80, 90 and I00. Thereafter, Analyzing Microprocessor I50 compares the address read from said latches with each of the address ranges it has been previously programmed to monitor, and increments the counter in RAM 170 which corresponds to the address or address range in which the address read from the latches falls. Analyzing Microprocessor 150 also increments another counter which counts the total number of samples. Thereafter, Analyzing Microprocessor 150 waits for the next interrupt from Timer 140, and repeats the above described process.

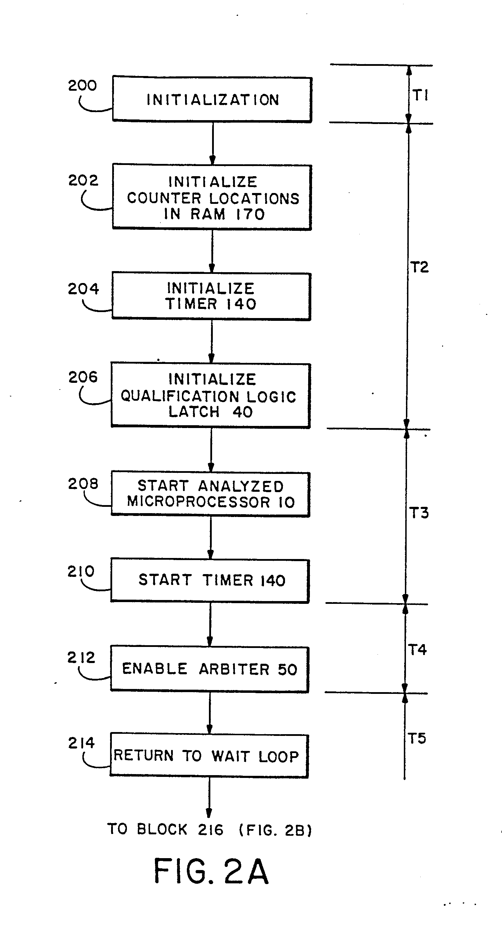

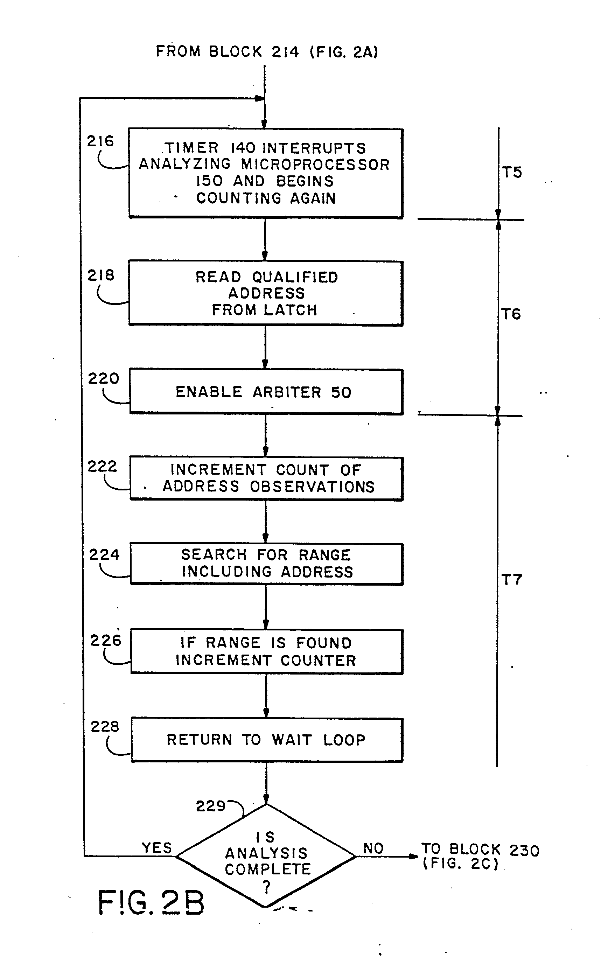

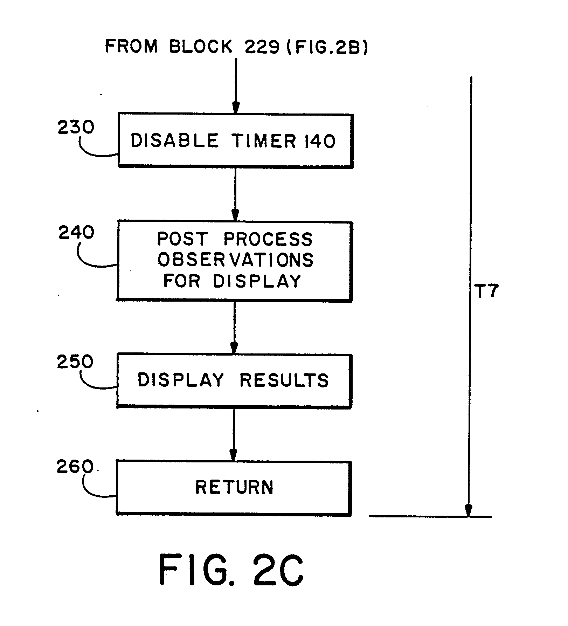

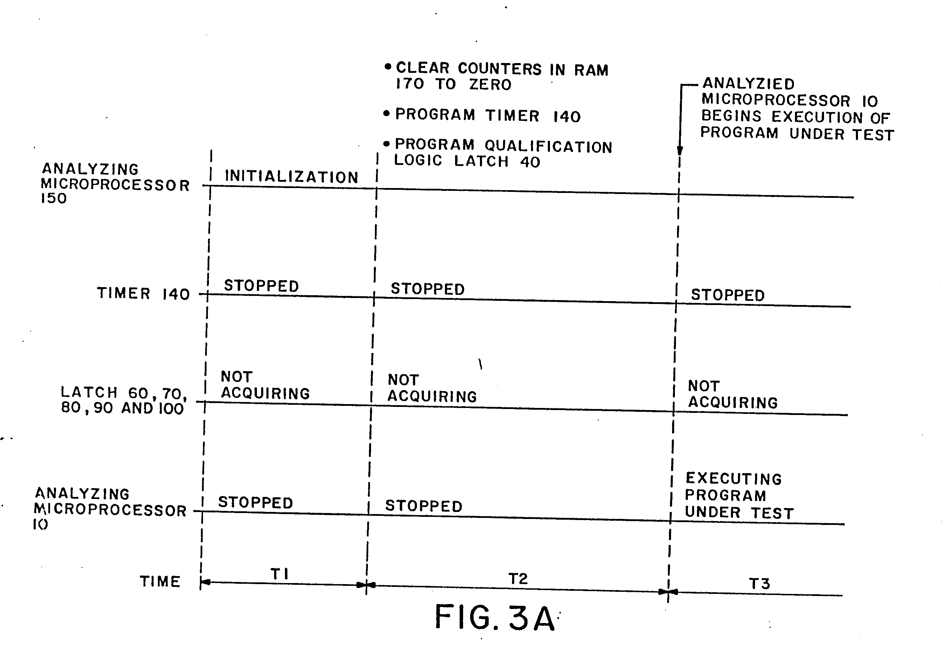

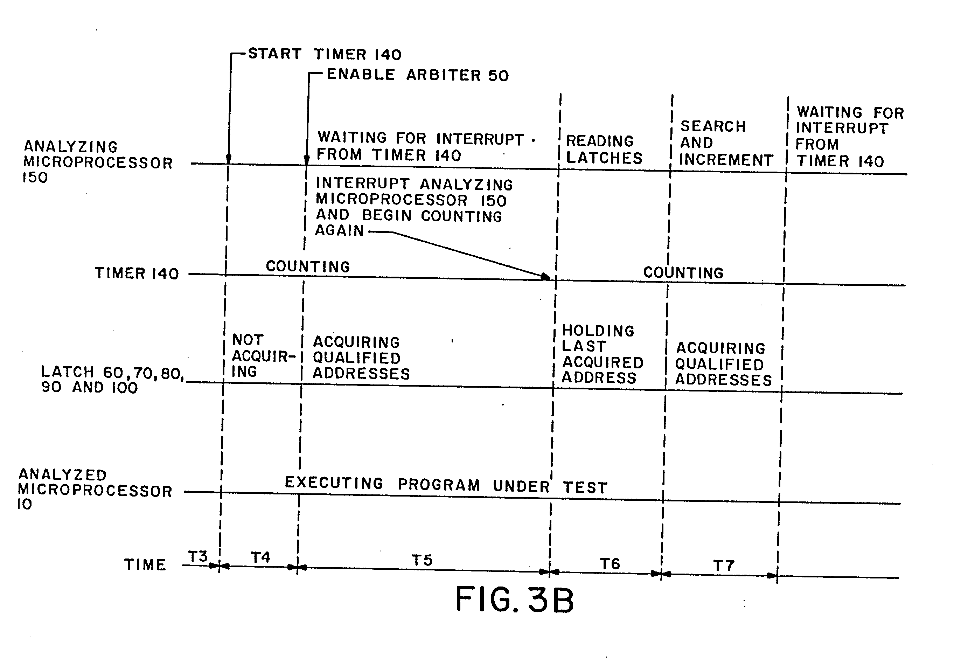

Figures 2A, 2B and 2C broadly illustrate functional steps performed by Analyzing Microprocessor 150. Figures 3A, 3B and 3C illustrate the basic operations which sequentially occur with respect to Analyzing Microprocessor 150, Timer 140, Latches 60, 70, 80, 90 and 100, and Analyzed Microprocessor 10.

Referring now to Figure 2A, Analyzing Microprocessor 150 (Figure IC) first performs initialization of any hardware which may be associated therewith, as illustrated generally by block 200. Such initialization routines would include the reading of information from Communications Interface 180 for both operational instructions as well as data to be used in connection with the monitoring operation. As was previously discussed, individual and/or ranges of addresses contained within the address space of Analyzed Microprocessor 10 are first selected for monitoring, according to selected qualification information. This information, received through Communication Interface 180 is transferred to RAM 170 by Analyzing Microprocessor 150 during the initialization routines. In the preferred embodiment, the address information must be stored in a particular manner within RAM 170, and consequently requires processing to arrange said address information in a required format prior to storage within RAM 170, as will be more fully discussed hereafter. It will be recognized by one skilled in the art that the required processing of the address information could be performed either prior to transfer to Analyzing Microprocessor 150, or by Analyzing Microprocessor 150 subsequent to the transfer thereto. The interval of time associated with required initialization operations is illustrated in Figure 3A as time period TI. During time period TI Timer 140 is stopped, i.e., Timer 140 is not counting, Latches 60, 70, 80, 90 and 100 are not acquiring information, and Analyzed Microprocessor 10 is stopped, i.e., Analyzed Microprocessor 10 is not performing the execution of instructions from a program. The instructions for such initialization, as well as other instructions comprising the program which Microprocessor 150 executes are stored in ROM 160.

Microprocessor 150 requests information from ROM 160 by placing the address of a location within ROM 160 containing desired information on Address Port 154, along with appropriate control signals on Control Port 156. Address Decode 110 in response thereto functions to produce an enable signal on Address Decode Output Terminal 128. ROM 160, responsive to the enable signal produced by Address Decode 110, the information coupled to ROM Address Port 164 and ROM Control Port 168, operates to transfer the information previously stored in the location specified by the information at ROM Address Port 164 to ROM Data Port 162. Analyzing Microprocessor 150 thereafter operates to read the information present at Data Port 152, thereby obtaining the information stored in the address location of ROM 160 which was previously at Address Port 154. The foregoing described process repeats with respect to each location contained within ROM 160 for which the information stored therein is desired to be read. At the conclusion of time period TI, Analyzing Microprocessor 150 has completed the foregoing described initialization.

Thereafter, Analyzing Microprocessor 150 initializes the locations in RAM 170 which will be used for counting purposes, to a value of zero, as illustrated in block 202 (Figure 2A). This is done by Microprocessor 150 writing a zero value to each of these locations. Microprocessor 150 communicates with locations in RAM 170 in a similar manner as was previously described with respect to ROM 160 through an enable signal produced on Address Decode Output Terminal 130 and coupled to RAM Enable Terminal 176. The initialization of the locations in RAM 170 which will be used for counting purposes occurs during time period T2 (Figure 3A).

Thereafter Microprocessor 150 performs the necessary initialization associated with Timer 140 (Figure IB), as illustrated by block 204 of Figure 2A. Such initialization process typically includes not only sending command information to place Timer 140 in a desired mode of counting, but also includes sending to Timer 140 the desired timing period. Analyzing Microprocessor 150 (Figure IC) communicates command information to Timer 140 by transferring the address of Timer 140 to Address Port 154, the corresponding command or data information at Data Port 152, and the corresponding control signals at Control Port 156. Thereafter, Address Decode 110, responsive the information on Address Port 154 and Control Port 156 will operate to produce an enable signal on Terminal 124 of Address Decode 110. Timer 140, responsive to the enable signal on Timer Load Terminal 144 from Address Terminal 124 will operate to read the information concurrently present at Timer Data Port 142, thereby coupling the information from Data Port 152 of Microprocessor 150 to Timer 140. The initialization associated with Timer 140 occurs during time period T2 (Figure 3A).

Thereafter Analyzing Microprocessor 150 performs the necessary initialization associated with Qualification Logic Latch 40 (Figure IA), as illustrated by block 206 of Figure 2A. Such initialization operates to specify the particular type of activity which is of interest to monitor with respect to the addresses accessed by Analyzed Microprocessor 10. Such information could vary in scope, from the monitoring of any type of accesses, e.g., either a read or write to an address, to more limited monitoring, e.g., read-only operations. It should be understood that Qualification Logic Latch 40 could be programmed to monitor any type of activity which may occur with respect to addresses associated with Microprocessor 10 which may occur, as defined by control information present on Control Port 16 and Address Space Output Port 18 of Analyzed Microprocessor 10. Analyzing Microprocessor 150 effects the initialization of Qualification Logic Latch 40 by placing the desired qualification information on Data Port 152, the address associated with Qualification Logic Latch 40 on Address Port 154, and the corresponding control signals on Control Port 156. Thereafter, Address Decode 110 (Figure IB), responsive to information on Address Decode Control Port 134 and Address Decode Address Input Port 136 operates to produce an enable signal on Address Decode Output Terminal 126. Thereafter, Qualification Logic Latch 40, responsive to information present on Qualification Logic Latch Input Port 42 and Terminal 44 operates to store the information which is present on Qualification Logic Latch Input Port 42, i.e., the desired qualification information, and thereafter continuously couple same to Qualification Logic Latch Output Port 46. The initialization associated with Qualification Logic Latch 40 occurs during time period T2 (Figure 3A).

During the time period T2, Timer 140 is stopped, Latches 60, 70, 80, 90 and 100 are not acquiring data, and Analyzed Microprocessor 10 is stopped.

Thereafter Analyzed Microprocessor 10 is started, i.e., Analyzed Microprocessor 10 is allowed to begin executing instructions of the program which is desired to be monitored. This is illustrated in block 208 - (Figure 2A). The completion of the foregoing described operations with respect to blocks 202, 204 and 206 (Figure 2A) marks the end of time period T2, and, with the starting of Analyzed Microprocessor 10, the beginning of time period T3. During time period T3, Timer 140 is stopped, Latches 60, 70, 80, 90 and 100 are not acquiring data, and Analyzed Microprocessor 10 is executing the instructions of the program which is desired to be monitored.

Thereafter, Analyzing Microprocessor 150 issues a command to Timer 140 to begin the timing operation, i.e., begin timing of the pre-selected time interval. This is illustrated in block 210 (Figure 2A). Analyzing Microprocessor 150 initiates the operation of Timer 140 by issuing a start command to Timer 140, in an manner identical to that previously discussed with respect to the initialization of Timer 140. The issuing of a command to Timer 140 by Analyzing Microprocessor 140 defines the end of time period T3, and the beginning of time period T4 (Figure 3B).

Thereafter, Analyzing Microprocessor 150 enables Arbiter 50 (Figure IA) as indicated in block 212 (Figure 2A),i.e., an enable signal is coupled to Arbiter Enable Terminal 56, thereby enabling information coupled to Arbiter Input Terminal 52 to appear on Arbiter Output Terminal 58. Analyzing Microprocessor 150 enables Arbiter 50 by placing the address associated with the last latch which is read during the process of reading the group of latches, i.e., Latch 100, on Address Port 154 and corresponding control information on Control Port 156. In particular, Address Decode 110, responsive to information at Address Decode Control Port 134 and Address Decode Address Input Port 136 functions to produce a corresponding enable signal on Address Decode Output Terminal 120. Arbiter 50, responsive to an enable signal on Arbiter Enable Terminal 56 functions to couple information present on Arbiter Input Terminal 52 to Arbiter Output Terminal 58. The enabling of Arbiter 50 marks the conclusion of time period T4. During time period T4, Timer 140 is counting, Latches 60, 70, 80, 90 and 100 are not acquiring addresses, and Analyzed Microprocessor 10 is executing the program under test.

At this point, i.e., at the beginning of time period T5, all initialization has been completed, Analyzed Microprocessor 10 has begun execution of instructions contained in the program whose execution by Analyzed Microprocessor 10 is desired to be monitored, Timer 140 has begun timing of the desired time interval, and Latches 60, 70,, 80, 90 and 100 are storing information from Address Port 14 of Analyzed Microprocessor 10.

During time period T5, Analyzing Microprocessor 150 waits for a signal from Timer 140 indicating the that previously discussed time period has expired. This is typically achieved by looping instructions contained within the program which Analyzing Microprocessor 150 is executing. The return to these looping instructions is broadly indicated by block 214 (Figure 2A). During time period T5 Analyzing Microprocessor 150 is waiting for the interrupt signal produced by Timer 140 on Timer Output Terminal 148 (Figure IB), Timer 140 is counting, Latches 60, 70, 80, 90 and 100 are acquiring qualified addresses, and Analyzed Microprocessor 10 is executing the program under test. In particular, Analyzed Microprocessor 10 (Figure IA) is executing instructions contained in the program under test, during which process Analyzed Micropro-

cessor I0 typically transfers various addresses to Address Port I4 along with corresponding control information on Control Port I6 and Address Space Output Port I8. For each address that is transferred to Address Port I4, Qualification Logic 30 functions to compare the corresponding control information, i.e., the corresponding information Analyzed Microprocessor I0 has received at Control Port I6 and transferred to Address Space Output Port I8 with the qualifying information coupled to Qualification Logic Input Port 36 by Qualification Logic Latch 40. If the control information present at Qualification Logic Ports 32 and 34 agrees with the qualifying information present at Qualification Logic Port 36, Qualification Logic 30 operates to produce a pulse on Qualification Logic Output Terminal 38. Thereafter, Arbiter 50, responsive to the pulse from Qualification Logic 30 coupled to Arbiter Input Terminal 52, functions to couple the pulse to Arbiter Output Terminal 58. The enable signal produced on Arbiter Output Terminal 58 functions to store the information present on Address Terminal I4 of Microprocessor I0 into Latch 60, 70, 80, 90 and I00 (Figure IB). If the control information present at Qualification Logic Port 32 and 34 does not agree with the qualifying information present at Qualification Logic Port 36, Qualification Logic 30 does not produce a signal on Qualification Logic Output Terminal 38, and the information present on Address Port I4 is not stored.

The foregoing described process of comparing the control information present at Qualification Logic Input Ports 32 and 34 with the qualifying information present at Qualification Logic Input Port 36, the subsequent potential production of a signal by Qualification Logic 30 and accompanying operations of Arbiter 50 and Latches 60, 70, 80, 90 and I00 continue until the pre-selected time period expires, i.e., Timer I40 produces a signal on Timer Output Terminal I48 (Figure IB). It should be understood in this regard that the foregoing described process of storing address information present at Address Port I4 of Analyzed Microprocessor I0 in Latches 60, 70, 80, 90 and I00 will typically occur a plurality of times prior to the expiration of the pre-selected time period, i.e., prior to the interrupt produced by Timer I40. As the storing of information into said latches operates to replace information previously stored therein, not all address information stored therein will be read by Analyzing Microprocessor I50, as more fully discussed hereafter. The foregoing described operations occur during time Period T5 (Figure 3B).

At the expiration of the pre-selected time period, Timer I40 produces an indication thereof on Timer Output Terminal I48, and again begins timing of the pre-selected time period, as illustrated in block 216 - (Figure 2B). The indication produced by Timer I40 is coupled to both Arbiter Disable Terminal 54 and Interrupt Terminal I58 of Analyzing Microprocessor I50, as previously discussed.

As the indication produced on Timer Output Terminal I48 is coupled to Arbiter Disable Terminal 54, the indication produced by Timer I40 operates to inhibit the further coupling of any pulse coupled from Arbiter Input Terminal 52 to Arbiter Output Terminal 58. As a consequence thereof, the contents of Latches 60, 70, 80, 90 and I00 will remain static, allowing the asychronous reading by Analyzing Microprocessor I50 of the last address information stored therein. The occurrence of the signal from Timer I40, i.e., the receipt of the interrupt by Analyzed Microprocessor I50 marks the completion of time period T5, and the start of time period T6.

As the indication produced on Timer Output Terminal I48 is also coupled to Interrupt Terminal I58, Analyzing Microprocessor I50 is interrupted from the previously described wait loop, and thereafter reads address information from Latches 60, 70, 80, 90 and I00, increments a counter which functions to count the total number of times the contents of Latches 60, 70, 80, 90 and I00 were read by Analyzing Microprocessor I50, compares the value of the address read from said latch against the pre-selected ranges of addresses which have had counters established therefor in RAM I70 (Figure IC), and increments the corresponding counter.

In particular, subsequent to the interrupt produced by Timer I40, Analyzing Microprocessor I50 reads the contents of Latches 60, 70, 80, 90 and I00, as broadly indicated in block 218 (Figure 2B). As each of Latches 60, 70, 80, 90 and I00 contain a portion of the address information, each latch is separately read. Analyzing Microprocessor I50 (Figure IC) first reads the contents of Latch 60 (Figure IB) by transferring the address thereof to Address Port I54 of Analyzing Microprocessor I50 along with corresponding control information to Control Port I56. Address Decode II0 (Figure IB), responsive to said information from Analyzing Microprocessor I50 at Address Decode Control Port I34 and Address Decode Address Input Port I36 operates to produce an enable signal on Address Decode Output Terminal II2. Latch 60, responsive to said enable signal from Address Decode II0 on Latch Output Enable Terminal 66 functions to transfer the information stored therein to Latch Data Output Port 68. Analyzing Microprocessor II0 thereafter reads the information from Latch Data Output Port 68 at Data Port I52. In a similar manner the contents of Latches 70,

80, 90 and 100 are read by Analyzing Microprocessor 150. The reading of information from Latch 60, 70, 80, 90 and 100 occurs during time period T6 (Figure 3B). During time period T6, Timer 140 is counting, Address Latches 60, 70, 80, 90 and 100 are holding the last acquired address, and Analyzed Microprocessor 10 is executing the program under test.

The reading of the last latch, i.e., Latch 100, by Analyzing Microprocessor 150 again enables Latches 60, 70, 80, 90 and 100 for the storage of address information by enabling the coupling of information from Arbiter Input Terminal 52 to Arbiter Output Terminal 58 (Figure 1A), as indicated by block 220 (Figure 2B). In particular, Analyzing Microprocessor 150 places the corresponding address of the last latch contained in the group of latches, i.e., Latch 100, on Address Terminal 154 along with corresponding information on Control Terminal 156. Address Decode 110, responsive to the information from Analyzing Microprocessor 150 at Address Decode Control Port 134 and Address Decode Address Input Port 136 operates to produce a corresponding enable signal on Address Decode Output Terminal 120. As the enable signal produced on Address Decode Output Terminal 120 of Address Decode 110 is coupled to both Latch Output Enable Terminal 106 of Latch 100 and Arbiter Enable Terminal 54 of Arbiter 50, the reading of the information contained in the last latch, i.e., Latch 100, operates to produce an enable signal on Arbiter Enable Terminal 56. Arbiter 50 thereafter again couples information from Arbiter Input Terminal 52 to Arbiter Output Terminal 58. Thereafter, responsive to control information from Analyzed Microprocessor 10 agreeing with the information previously stored in Qualification Logic Latch 40 (block 206 of Figure 2A), information appearing at Address Port 14 of Analyzed Microprocessor 10 will again be stored in Latches 60, 70, 80, 90 and 100, as previously discussed. As the reading of the contents of the latches by Analyzing Microprocessor 150 occurs during time period T6, the production of the foregoing described enable signal to Arbiter 50 occurs at the end of time period T6 (Figure 3B).

Thereafter, Analyzing Microprocessor 150 increments the number of times which address information has been observed, i.e., the number of times the contents of Latches 60, 70, 80, 90 and 100 has been collectively read, as indicated in block 220 (Figure 2B).

Thereafter, Analyzing Microprocessor 150 compares the address read against the previously specified ranges of addresses of interest, as indicated in block 224 (Figure 2B). If the address which was read from the latches is found to fall within one of the specified ranges, a count indication is produced, i.e., the counter associated with that range is incremented, as indicated in block 226. The aforedescribed searching and incrementing process occurs during time period T7 (Figure 3B). During time period T7 Timer 140 is counting, Latches 60, 70, 80, 90 and 100 are acquiring qualified addresses, and Analyzed Microprocessor 10 is executing the program under test.

At the conclusion of the aforedescribed processing of the information from Latches 60, 70, 80, 90 and 100, Analyzing Microprocessor 150 again returns to the aforedescribed wait loop, as indicated in block 228 (Figure 2B). At this point Analyzing Microprocessor 150 will check to see if the foregoing described process should be repeated or if the analysis of Analyzed Microprocessor 10 is completed, as indicated in Block 229. If the analysis is not complete, then Timer 140 will again produce an indication thereof on Timer Output Terminal 148, and the above described process will repeat, i.e., the operations discussed with respect to blocks 216, 218, 220, 222, 224, 226 and 228 of Figure 2B. If however, the analysis of Analyzed Microprocessor 10 is completed, then Analyzing Microprocessor 150 next performs step 230 (Figure 2C), as more fully described hereafter. The conditions under which the analysis of Analyzed Microprocessor 10 would be considered as completed would vary depending upon the nature of the desired analysis, and could include monitoring for selected intervals of time, or until selected events occurring external to Analyzed Microprocessor 10 have occurred.

The steps which are performed at the conclusion of the foregoing described data collection process are illustrated in Figure 2C. Referring to Figure 2C, Timer 140 is first stopped in step 230 by Analyzing Microprocessor 150. This is performed by issuing a command to Timer 140 to effect the stopping of its operation, in a manner as was previously described with respect to communicating commands thereto by Analyzing Microprocessor 150.

Thereafter in step 240 the information which was obtained as a result of the foregoing described data collection activity is processed in accordance with the particular requirements associated with the analysis process. Such processing of collected information would vary depending upon the desired processing activity, and could include not only the formatting of the information in tabular or graphic format, but further statistical processing according to techniques well known to one skilled in the art.

Thereafter the results of the data collection and processing are displayed in step 250, and again would vary depending upon the nature of the display desired. While such display would typically include the display of the results in a visual format, i.e., in either a tabular or graphic format, such display step could likewise include the transfer of the resulting information to a suitable storage medium, i.e., floppy or hard disk, or transmission to other data processing or storage devices.

Thereafter, in step 260 Analyzing Microprocessor 150 would again return to the aforedescribed wait loop.

While the foregoing has described a method and apparatus for the analysis of the performance of a processor in the execution of a program of interest, it will be observed that the time required for Analyzing Microprocessor 150 to perform the necessary processing of information obtained from Latches 60, 70, 80, 90 and 100 discussed with respect to Figure 2B is an important consideration. Referring once again to Figure 3B it is observed that the activities which are performed by Analyzing Microprocessor 150 during time periods T6 and T7 must be completed prior to the next interrupt by Timer 140. In particular, the time required for the activities which take place during time periods T6 and T7 operate to define the minimum time period which may be successfully used with respect to Timer 140. As the activity which takes place during time period T6 comprises the reading of information from Latches 60, 70, 80, 90 and 100, as more fully discussed with respect to block 218 of Figure 2B, it is clear that the time required for this operation is directly dependent upon the amount of information which Analyzing Microprocessor 150 may access via Data Port 152 during a single read operation. By way of example, if Data Port 152 is eight bits wide, then eight bits is the maximum amount of information which may be read in by Analyzing Microprocessor 150 during a single read operation, and consequently operates to define the maximum size of the associated latches, i.e., Latches 60, 70, 80, 90 and 100. However, if Data Port 152 is sixteen bits wide, then sixteen bits may be read during a single read operation, and each of the corresponding latches may be comprised of the same number of bits, thereby decreasing the time required to perform the operation which occurs during time period T6.

However, while increasing the amount of information which Analyzing Microprocessor 150 may read during a single read operation, the amount of time required to process the information read is a more significant consideration, i.e., the amount of time required to perform the operations associated with the aforedescribed steps discussed with respect to blocks 222, 224, 226 can be quite time consuming. It is therefore important that the time required to compare the address read in from the latches, and perform the searching and incrementing of an associated counter, be minimized.

While there are many ways in which information may be arranged and stored, some data structures, while more involved to implement, require significantly less time to perform the processing of data associated therewith. Consequently, in the preferred embodiment, a data structure was employed in which the aforedescribed operations could be performed in a highly efficient manner.

In the preferred embodiment, the information previously discussed with respect to the counter locations in RAM 170 is stored as an array of records, with each record containing three fields: a low address field, a high address field, and a counter field. The record number of the data array will hereafter be referred to as the index. The index of the the first record in memory will be one, the second record two, etc. The low address field is the lower bound which a matched address must be greater than or equal to, to qualify as a match. The high address field is the upper bound which a matched address must be less than or equal to, to qualify as a match. The counter field contains the number of times a sampled address fell within the range defined by the lower and upper bounds of the record.

In the methods of search used in the preferred embodiment, each of the address ranges must be exclusive of each of the other address ranges, i.e., a selected address must belong to one and only one address range. In addition, each address range must have a non-negative distance between the low address and the high address, i.e., the address contained in the low address field must in fact be less than or equal to the address contained in the high address field.

·The array of records is a position oriented, in-order binary tree. The tree is sorted with the range as the key. As each range is exclusive of all other ranges, each range has an unambiguous relationship with all the other ranges in the array.

The relationships of the binary tree are maintained by the ordering of the ranges in the array. Consequently, the positions of ranges subordinate to a selected range, hereafter referred to as a child of a range, may be calculated from the array index of the range itself. In particular, in an array having i as an index of a range in the array, and having a position at least as great as $(i * 2) + 1$,

$(i * 2)$ is the index of the left child, and

(i * 2) + l is the index of the right child.

It is understood in this regard that any child with an index greater than the maximum position in the array is non-existent.

In accordance with the preferred embodiment of the method and apparatus of the present invention, the binary array must be packed, i.e., the binary tree must fill up the array without any empty elements, except at the end of the array. In particular, all elements of the array are used in a linear fashion so that an entire non-empty tree fits within positions of the array indexed by one through n, and none of positions one through n is empty. It is consequently necessary that the pre-selected range of addresses be properly placed in the foregoing described data array within RAM I70. While there are many ways in which this may be accomplished, the algorithm employed in the preferred embodiment is given in Table I below.

```
struct range { /* range counter data structure */

        unsigned int lower;
        unsigned int upper;
        unsigned int count;
}
/* global variables */
```

```
struct range alist[2047]; /* array of ranges in
                                ascending order */
struct range tree[2048];  /* array of ranges
                                eventually in packed
                                tree order */
int n; /* size of the total used portions of
            the arrays */


splittree(self,base,length) /* the main function of the
                                tree pack operation */


/*
 *Figure out where to split the array pointed to by
 *base to make a packed binary tree.  Base and length
 *behave like an array "int base[length]".  This makes
 *it possible to apply splittree to the subarrays easily.
 *At most one of the sides resulting from this split
 *has a ragged bottom rank.  The other (and possibly
 *both) is (are) "full", with 2^n-1 nodes for some
 *integer n.  The full side is passed to spliteasy for
 *quicker handling.  Spliteasy is an optimization.
 */

int self;/* position in the tree array to be filled
            by the next sub-tree root */
int length; /*length of the sub-alist array to be
                split */
    int middle,
        k,          /* the maximum integer such that
                        2k-1 doesn't exceed length */


        bits;       /* work variable used to calculate
                        "k" */


    int twokm1,     /* the evaluated result of 2^k-1,
                        the biggest full tree size */
        twokm1m1,   /* the evaluated result of
```

```
                       2^(k-1)-1, the second biggest
                       full tree size */


            j;         /* the number of records that fill
                       a full tree at 2^k-1 and just
                       the entire left side of the next
                       level of the tree (if full, the
                       next level holds 2^k records
                       itself */


    if (length <= 0)  /*have gone past the terminal
                            leaves of the tree */
         return;        /*end recursion */


    if (length == 1) { /*have come to a terminal leaf
                            of the tree */
         tree[self] = *base;  /*found location for
                                   terminal leaf */
         return;   /*end recursion */
    }


    /*
     *compute k such that 2^k-1 <= length < 2^(k+1)-1
     *This is log(length+1)  */
    k = -1;
    bits = length+1;
    while (bits != 0) { /*algorithmically determine
                            log2(length+1) */
         bits >> 1;
         k++;
    }


    /*
     *Compute 2^k-1
     */
    twokml = (1<<k) - 1;  /*now convert that value
                                into a number */
```

```
/*
 *If length == twokml, then both sides contain
 *2^(k-1)-1 nodes.  For instance, if there are 15
 *in this one, (p,15).  The middle one is
 *element p+7, which is 15 div 2 (15 always odd).
 *The left half is (p,7).
 *The right half is (p+8,7).
 */
if (length == twokml) { /* if the remaining tree
                                 is "full" on one level
                                 only */
    middle = length >>1;
    spliteasy(2*self,base,middle); /*no funny
                                         business,
                                         split */
    spliteasy(2*self+1,base+middle+1,middle);
        /* is obvious */
    tree[self] = base[middle]; /* place sub-tree
                                     root */
    return; /*sub trees completed */
}


/*
 *Compute2^(k-1)-1  (The next "full" level up)
 *Compute j=(3/2)2^k-1 (The half-way point, in
 *list, of next level down)
 *(as it turns out, we can reduce terms and find
 *we have components that form j with simple
 *arithmetic, demonstrated as follows)
 *
 *j == 2^k + 2^(k-1)-1
 *   == twokml + 1 + twokmlml +1 - 1
 *   ==twokml + twokmlml + 1.
 */


twokmlml = (1 << ( k-1 ) ) -1;
```

```
    j = (3*(1<<k)) / 2 - 1;


    /*
     *switch (length ? j) {
     *   case <:      right side is full, contains 2^(k-1)-1
     * nodes (right is full, one level up * from tree bottom)
     left side is full on * same level as right, but has *
     additional level that is less than * full, all in all
     contains "length-* twokmlml-1" nodes
     * middle offset for the tree split is * "length-twokmlml-
     1"

        *   case =>:      left side is full on bottom-most *
     level, contains 2^k-1 nodes.
        *              right side has zero or more elements *
     on bottom-most level, but is not full * on this level.
     * contains length-twokml-1 nodes.
     * (not full because that was excluded * earlier in code).
     middle offset is * twokml

        *

        * }
        */
    if (length < j) { /* only left side contains
                            bottom-most entries */
        middle = length - twokmlml -1; /* get root
                                            position */
        tree[self] = base[middle]; /*set root
                                        element */
        splittree(2*self,base,middle); /*recurse on
                                        tricky side*/
        splittree(2*self+1,base+middle+1,twokmlml);
            /*eliminate easy side in straight-
                forward way */


    } else { /*left side is full on bottom-most
                level, right might have remainders to
    to split up */
```

```
            middle = twokml; /* get root position */
            tree[self] = base[middle]; /*set root
                                        element */
            spliteasy(2*self,base,middle); /*do left
                                        side easy
                                        way */
         splittree(2*self+1,base+middle+1,length-twokml-1);
               /*recurse on the tricky side */
      }
   }


spliteasy(self,base,length) /*optimization routine for
                             splitting full tree */
int self; /*position in the tree array to be filled
          by the next sub-tree root */
struct range *base; /*base address of the sub-alist
                     array to be split */
int length; /* length of the sub-alist array to
             be split */


      int middle; /*holds index to middle of each
                   sub-array, hence sub-root */


      if (length <= 0) /* if past the terminal leaves,
                        defensive programming */
         return;   /* end recursion */
      middle = length >>1; /*find the middle of the
                           sub-list*/
      tree[self] = base[middle]; /*grab the sub-tree
                                 root */


      if (length >1) { /* if there can be more sub-tree's
                        recurse */
```

```
            spliteasy(2*self,base,middle); /*do the
                                        left side */
            spliteasy(2*self+1,base+middle+1,middle);
        }
    }
```

Algorithm to Insert Records in Data Array

Table 1

The manner in which the array of records produced by the algorithm of Table I is searched is illustrated in Figure 4. It will be understood in this regard that the following is a more detailed description of the basic functions previously described with respect to blocks 224 and 226 of Figure 2B. Referring now to Figure 4, an index counter is initially set equal to one in block 270. Thereafter, in block 272, the value of the index is checked to see if it exceeds the end of the array. If the value of the index does exceed the end of the array, then Analyzing Microprocessor I50 returns to the previously described wait loop to await the next interrupt from Timer I40, as indicated in block 274. However, if the value of the index does not exceed the end of the array, then the value of the address read from Latches 60, 70, 80, 90 and I00 is compared with the address contained in the high address field of the record in block 276. If the value of the address is greater than the value of the address contained in the high address field of the record, Analyzing Microprocessor I50 computes a new index, as illustrated in block 278. In particular, the value of the new index is determined by multiplying the value of the current index by two and adding one to the result. Thereafter, Analyzing Microprocessor returns and again performs the function previously discussed with respect to block 272. If, however, the value of the address read from the latches is not greater than the value of the address contained in the high address field of the record, then the value of the address read from the latches is compared with the value of the address contained in the low address field of the record, as illustrated in block 280. If the value of the address read from the latches is less than the value of the address contained in the low address field of the record, then Analyzing Microprocessor I50 computes a new index in block 282 by multiplying the current value of the index by two. Thereafter, Analyzing Microprocessor I50 again returns and performs the operations previously discussed with respect to block 272. If, however, the value read from the latches is not less than the value of the address contained in the low address field of the record, then a match has occurred, i.e., the value read from the latches is less than or equal to the value contained in the high address field but greater than or equal to the address contained in the low address field of the record, as illustrated in block 284. Analyzing Microprocessor I50 then increments the value contained in the counter field of the record, as also illustrated in block 284, and thereafter returns to the previously described wait loop in block 286.

A high level language representation of the foregoing process is given below in Table 2 in the computer programming language of "C".

```
extern int totalct;        /* total samples, incremented
                              for every observation */
extern int numrngs;        /* the number of ranges being
                              measured */
extern int samplelatch;    /* the hardware latch holding
```

```
                                        the most recent target
                                        processor memory
                                        address */
    extern struct {             /* the array of range
                                        counters */
        unsigned int addrlow;   /* the start of the address
                                        range */
        unsigned int addrhi;    /* the end of the address
                                        range */
        unsigned int count;     /* observed occurrences of
                                        the range */
    } rangtab[numrngs];         /* the range counter table
                                        itself */


    int pasampler()             /* interrupt service routine
                                        recording single
                                        observation of target
                                        processor address
                                        activity */
    register unsigned int taddr; /* register holder of the
                                        observed address */
    register unsigned int i;  .  /*  index into range counter
                                        array */
    {
        taddr = samplelatch;    /* read sampled target
                                        address, side effect
                                        is that latch will
                                        start receiving new
                                        valid addresses again */
        totalct = totalct + 1;  /* increment times observed
                                     */
        i = 1;                  /* start index off at the
                                        tree root */
        while (i <= numrngs) {  /* search the length of the
                                        table only */
            if (rangtab[i].addrlow > taddr) { /* if target
                                        address
```

23

```
                                           less than
                                           current
                                           range,
                                           descend
                                           left */
         i = 2 * i;     /* go to left child */
    } else (rangetab[i].addrhi < taddr) { /* if
                                           target
                                           address
                                          .greater
                                           than
                                           current
                                           range,
                                           go
                                           right
                                           */
         i = (2 * i) + 1;  /* go to right child */
    }else { /* target address must be within the
             current range */
         rangetab[i].count = rangetab[i].count + 1;
              /* increment the number of times this
                 range has been observed */
         return; /* return from interrupt now that
                   we've matched */
    }
  }


  return;  /* no match, must be out of range */
}


      "C" Language Representation of Steps
               in Figure 4


               TABLE 2
```

Referring back to Figure 3B, it will be understood that the pre-selected time periods for Timer I40 must be greater than the sum of time periods T6 and T7. As it is desirable to minimize this total time, it is correspondingly desirable to minimize both time period T6 and T7. The time period T6 may be minimized by choosing a microprocessor to implement the functions of Analyzing Microprocessor I50 having a maximum number of data lines associated with Data Port I54, as previously discussed. While the time required for time period T7 is significantly reduced by employing the foregoing described data structure and accompanying search method, time period T7 may be minimized by reducing the number of instructions required to perform the search and increment operation previously discussed. In the preferred embodiment, this was accomplished by minimizing the number of machine language statements produced by the compiling of the program of Table 2, and is given below in Table 3 for the Motorola 69008L8 microprocessor.

```
;=== struct pablock {/* counter array record structure */
;===           unsigned int saddr;
;===           unsigned int eaddr;
;===           unsigned int hits;
;=== };
;=== /* external variables used by the sampler */
;=== extern unsigned int Peek; /* latches holding
;===                                 sampled address */
;=== extern unsigned int Ttlhits; /* counter of total
;===                                 observations */
;=== extern struct pablock *Buckets; /* pointer to array
;===                                 of range counters */
;=== extern unsigned short int Endbkt; /* offset to end
;===                                 of above array */
```

```
c.pasmplr
    movem.l  a5/d4-d7,-(sp); save the registers we use
    move.l   c.Buckets,a5; pick up address of range
                         ; counter tree array
    moveq    #12,d5; hold the size of each range
                         ; counter record
    move.l   d5,d4; place size of records into
                         ; scratch
    move.w   c.Endbkt,d7; pick up offset to array end
    addq.l   #1,c.Ttlhits; increment counter of total
                         ; samples taken
    move.l   c.Peek,d6; read the sampled address
                         ; from latches
testrange
    cmp.l    4(a5,d4),d6; is address greater than
                         ; range end ?
    bls.s    testless; no, see if it's less than
         lsl.w  #1,d4; yes it is, descend right, i*2 + 1
    add.w    d5,d4
    cmp.w    d7,d4; have we fallen out of the tree ?
    bls.s    testrange; no, go around again
    movem.l  (sp)+,a5/d4-d7; outof tree, restore
                         ; registers
    rte; exit
testless
    cmp.l    0(a5,d4),d6; is sample less than
                         ; current range ?
    bcc.s    matched; no, has to be a match
    lsl.l    #1,d4; yes, descend left, 2*i
    cmp.w    d7,d4; have we fallen out of the tree ?
    bls.s    testrange; no, go around again
    movem.l  (sp)+,a5/d4-d7; out of tree,
                         ; restore registers
    rte; exit
matched
    addq.l   #1,8(a5,d4); has to be a match,
                         ; increment range counter
```

```
movem.l (sp)+,a5/d4-d7; all done, restore
                           ; registers

rte; exit


end
```

Assembly Language Program for Binary Tree Search
for 60008 Microprocessor

Table 3

The information in the array is arranged so that the array is filled without any empty elements, except at the end of the array. Consequently all elements of the array are used in a linear fashion so that an entire non-empty array fits within positions of the array indexed by I through n, and none of positions I through n is empty. This condition is known as a packed binary tree. As the information is stored in a packed binary tree, the maximum number of pre-selected address ranges which may be searched is exponentially related to the level of the binary tree. In particular, as the level of the binary tree increases, the number of address ranges which can be searched increases by two raised to an exponential power, equal to the level of the binary tree. As the time required to search each level of the binary tree is equal to the maximum time required to perform the foregoing operations discussed with respect to Figure 4, it is observed that a very large number of ranges may be searched in a minimum amount of time. As a consequence thereof, the number of pre-selected ranges of addresses which may be searched by Analyzing Microprocessor I50 may be very large within correspondingly small time periods for time period T7 (Figure 3B).

Upon completion of the collection of information as above described, the amount of time spent within the various parts of the analyzed processor address space is known. Each address or range of address specified in the initialization phase will have a percentage of total execution time attributed to it. The amount of time spent in other addresses, besides the ones specified at initialization, will have a single precentage of execution time attributed to them collectively.

By way of illustration, assuming at the completion of the collection of information there were a total number of I00 samples, of which 2I had addresses contained within a first range, 3 within a second range, I7 within a third range, and 0 within a fourth range. From the foregoing it would be stated that 2I% of the total time was spent within the address range of the first range, 3% within the address range of the second range, I7% within the address range of the third range, and 0% within the address range of the fourth range. The time spent outside of the specified ranges would be 59%, i.e., the difference between I00% and the sum of the percentages of the observed ranges. Because of the statistical nature of the invention, the observed percentages of time should be viewed with statistical qualification.

Each time the contents of the latches are read, it can be considered that a number of "experiments" takes place, one for each range. For each range specified and the collective undefined range, a "Bernouli trial" has been performed. The result with respect to each of the ranges may have only two possible outcomes: either the sampled address is in the range, or it is not. No other outcome is possible. As is well known by one of ordinary skill in the art, a series of Bernouli trials where the outcomes are accumulated forms a "binomial" distribution. Consequently, for each of the ranges specified, and the undefined range, a distinct binominal distribution qualifies the resultant percentage, as more fully discussed in PROBABILITY AND STATISTICS FOR ENGINEERS by Irwin Miller and John E. Freund, I985.

While the foregoing has described the method and apparatus of the present invention in terms of the apparatus of the preferred embodiment, the details of such are not to be interpreted in a manner as to limit the present invention to the foregoing described preferred embodiment. To the contrary, many modifications thereto would be apparent to one of ordinary skill in the art. Such modifications are to be considered within the spirit and scope of the present invention, which is to be limited only by the scope of the following claims.

## Claims

1. A method for monitoring the operation of a processing unit having an address, data and control port, comprising the steps of:

comparing information present on the control port with pre-selected information, and producing a signal indication upon occurrence of a match between the two informations;

storing signal information present on the address port upon occurrence of the match;

reading the stored information at pre-determined intervals of time; and,

processing the read information to indicate frequency of occurrence of address ranges.

2. A method for monitoring the operation of a processing unit having an address, data and control port, comprising the steps of:

comparing the information present on the control port with pre-selected information, producing a signal indication upon occurrence of a match between the two informations, and storing signal information present on the address part upon occurrence of the match, all of said steps being performed in a repetitive fashion; and,

reading the stored information at pre-determined intervals of time, and,

processing the read information to indicate frequency of occurrence of address ranges.

3. The method as recited in claim 2, wherein the step of storing the signal information further comprises the step of replacing previously stored information with information present on the address port of the processing unit.

4. A method as recited in claim 2, wherein the reading of the stored information is asychronous with operations of the processing unit.

5. A method as recited in claim 2, wherein the step of storing the signal information further comprises the step of replacing previously stored information with information present on the address port of the processing unit, and the step of reading the stored information further comprises reading the stored information asychronous with the operations of the processing unit.

6. A method as recited in claim 2, wherein the processing of the read information further comprises the steps of:

comparing the read information with predefined information and producing a count indication in response to the read information agreeing with the predefined information;

counting the number of count indications produced; and,

storing the number of count indications.

7. A method as recited in claim 6, further comprising the step of counting the number of times the stored information was read.

8. A method as recited in claim 6 above, wherein the predefined information comprises a first, second and third number, the first number being equal to or less than the second number, the second number being equal to or greater than the first number, and the comparing step further comprising the steps of comparing the read information with the first and second number, and responsive to the read information being equal to or greater than the first number and equal to or less than the second number, and incrementing the value of the third number.

9. A method as recited in claim 8, further comprising the step of counting the number of times the stored signal information was read.

10. A method as recited in claim 2, wherein the preselected information comprises a set of first, second and third numbers, the first number of each set being equal to or less than the second number of the set, the second number each set being equal to or greater than the first number of the set, and the comparing step further comprising the steps of comparing the read information with the first and second numbers of each set, and responsive to the read information being equal to or greater than the first number of a set and equal to or less than the second number of the set, and incrementing the value of the third number of the set.

11. A method as recited in claim 10, further comprising the step of counting the number of times the stored information was read.

12. Apparatus for monitoring the activity of a processor having an address, data and control port, comprising:

comparision means coupled to the control port of the processor for comparing information present at the control port with pre-selected information and producing a signal indication upon occurrence of a match between the two informations;

latch means for storing signal information present at the address port upon occurrence of the match;

timing means for repetitively timing pre-determined intervals of time, and producing an indication at the expiration of each interval;

storage means responsive to the indication produced by said timing means for storing signal information present in said latch means.

13. Apparatus for monitoring the activity of a processor having an address, data and control port, comprising:

comparison means coupled to the control port of the processor for repetitively comparing information present at the control port with pre-selected information and producing a signal indication upon occurrence of a match between the two informations;

latch means for storing signal information present at the address port upon occurrence of the match;

timing means for repetitively timing pre-determined intervals of time, and producing an indication at the expiration of each interval;

storage means responsive to the indication produced by said timing means for storing signal information present in said latch means.

14. The apparatus as recited in claim 13, wherein said latch means further comprises means, responsive to the signal indication from said comparision means, for replacing information previously stored in said latch means with information present at the address port of the processor.

15. The apparatus as recited in claim 13, wherein said timing means operates asychronous with the operations of the processor.

16. The apparatus as recited in claim 13, wherein said latch means further comprises means, responsive to the signal indication from said comparision means, for replacing information previously stored in said latch means with information present at the address port of the processor, and wherein said timing means operates asychronous with the operations of the processor.

17. The apparatus as recited in claim 13, wherein said storage means further comprises:

means for comparing the read information with predefined information and producing a count indication in response to the read information agreeing with the predefined information;

means for counting the number of count indications produced; and,

means for storing the number of count indications produced.

18. The apparatus as recited in claim 17, wherein said storage means further comprising means for counting the number of times said storage means stores information present in said latch means.

19. Apparatus as recited in claim 17, wherein the predefined information comprises a first, second and third number, the first number being equal to or less than the second number, the second number being equal to or greater than the first number, and the storage means further comprises means for comparing the read information with the first and second number, and responsive to the read information being equal to or greater than the first number and equal to or less than the second number, incrementing the value of the third number.

20. Apparatus as recited in claim 19, wherein said storage means further comprises means for counting the number of times the stored information was read.

21. The apparatus as recited in claim 13, wherein the predefined information comprises a set of first, second and third numbers, the first number of each set being equal to or less than the second number of the set, the second number of each set being equal to or greater than the first number of the set, and the storage means futher comprising means for comparing the read information with the first and second numbers of each set, and responsive to the read information being equal to or greater than the first number of a set and equal to or less than the second number of the set, incrementing the value of the third number of the set.

22. Apparatus as recited in claim 21, wherein said storage means further comprises means for counting the number of times said storage means stores information present in said latch means.

23. Apparatus for monitoring the activity of a processor having an address and control ports, comprising:

comparision means coupled to the control port of the processor and responsive to preselected

29

information from a control means for comparing information present at the control port with the pre-selected information from the control means, and producing a signal indication upon occurrence of a match between the two informations;

latch means coupled to a control means, responsive to information at the address port of the processing unit and the signal indication from said comparision means, for storing signal information at the address port;

timing means responsive to information from a control means for producing an indication at the expiration of a pre-determined interval of time;

control means coupled to said timing means, comparision means and latch means for coupling information to said timing means and to said comparision means, and for reading and storing signal information present in said latch means.

24. Apparatus as recited in claim 23, wherein said comparision means further comprises:

storage means coupled to said control means for storing the pre-selected information from the control means and producing a signal in response to the stored information; and,

comparision logic means coupled to said storage means and to the control port of the processor for comparing the signal from said storage means with information present at the control port, and producing the signal indication in response thereto.

25. Apparatus as recited in claim 23, wherein said latch means further comprises means responsive to the signal indication from said comparison means for replacing information stored in said latch means with signal information at the address port.

26. Apparatus as recited in claim 23, wherein said timing means further comprises apparatus for repetitively timing pre-determined intervals of time, and producing an indication at the expiration of each interval.

27. Apparatus as recited in claim 23, wherein said control means further comprises means for reading and storing signal information present in said latch means responsive to the indication from said timing means.

28. Apparatus as recited in claim 23, wherein said control means further comprises means for reading and storing signal information present in said latch means asychronous with operations of the processor.

29. Apparatus as recited in claim 23, wherein said control means further comprises means for processing the signal information read from said latch means.

30. Apparatus as recited in claim 29, wherein said control means further comprises means for comparing the signal information read from said latch means with pre-defined information, and counting the number of times the signal information read from said latch means agrees with the pre-defined information.

31. Apparatus as recited in claim 29, wherein the predefined information comprises a first, second and third number, the first number being equal to or less than the second number, the second number being equal to or greater than the first number, and the control means further comprises means for comparing the signal information read from said latch means with the first and second number, and responsive to the read information being equal to or greater than the first number and equal to or less than the second number, incrementing the value of the third number.

32. Apparatus as recited in claim 31 wherein said control means further comprises means for storing the predefined information in a binary tree data structure.

33. Apparatus as recited in claim 31, wherein said control means further comprises means for counting the number of times signal information was read and stored from said latch means.

34. Apparatus as recited in claim 29 wherein the predefined information comprises a set of first, second and third numbers, the first number of each set being equal to or less than the second number of the set, the second number of each set being equal to or greater than the first number of the set, and the control means further comprising means for comparing the signal information with the first and second numbers of each set, and responsive to the signal information being equal to or greater than the first number of a set and equal to or less than the second number of the set, incrementing the value of the third number of the set.

35. Apparatus as recited in claim 34, wherein said control means further comprises means for storing the predefined information in a binary tree data structure.

36. Apparatus as recited in claim 32, wherein said control means further comprises means for counting the number of times signal information was read and stored from said latch means.

FIG. IA

FIG. IB

FROM ADDRESS PORT 14 (FIG. IA)

FROM ADDRESS SPACE OUTPUT PORT 18 (FIG. IA)

FROM ARBITER OUTPUT TERM. 58 (FIG. IA)

TO ARBITER ENABLE TERM. 56 (FIG. IA)

TO ARBITER DISABLE TERM. 54 (FIG. IA)

TO QUALIFICATION LOGIC LATCH INPUT PORT 42 (FIG. IA)

TO QUALIFICATION LOGIC LATCH INPUT TERM. 44 (FIG. IA)

LATCH 62 68 60 64 66
LATCH 72 70 78 74 76
LATCH 82 80 88 84 86
LATCH 92 90 98 94 96
LATCH 102 100 108 104 106

ADDRESS DECODE 110 112 114 116 118 120 122 124 126 128 130 132

TIMER OUTPUT 142 144 LOAD 146 READ 140 148

TO ANALYZING MICROPROCESSOR DATA PORT 152 (FIG. IC)

FROM ANALYZING MICROPROCESSOR CONTROL PORT 156 (FIG. IC) 134

FROM ANALYZING MICRO. ADDRESS PORT 156 (FIG. IC) 136

TO COMMUNICATION INTERFACE TERM. 186 (FIG. IC)

TO RAM ENABLE TERM. 176 (FIG. IC)

TO ROM ENABLE TERM. 166 (FIG. IC)

TO ANALYZING MICROPROCESSOR INTERRUPT TERM. 158 (FIG. IC)

0 228 242

ROM LATCH DATA OUTPUT
PORTS 68,78,88,98 AND 108
(FIG. IB) & QUALIFICATION
LOGIC LATCH INPUT PORT
42 (FIG. IA)

TO ADDRESS
DECODE CONTROL
PORT 134 (FIG.IB)

TO ADDRESS
DECODE INPUT
PORT 136 (FIG. IB)

FROM ADDRESS
DECODE OUTPUT
TERM. 132 (FIG. IB)

FROM ADDRESS
DECODE OUTPUT
TERM. 130 (FIG.IB)

FROM ADDRESS
DECODE OUTPUT
TERM. 128 (FIG.IB)

FROM TIMER
OUTPUT TERM. 148
(FIG. IB)

150

ANALYZING
MICROPROCESSOR

DATA

152

154

ADDRESS

156

CONTROL

158

INTERRUPT

184  180

COMMUNICATIONS
INTERFACE

188

189

TO
EXTERNAL
DEVICE

182

164  160

ROM

162

168  166

174

170  172

RAM

178

176

0 228 242

FIG. IC

0 228 242

| | |
|---|---|
| 200 — INITIALIZATION | T1 |
| 202 — INITIALIZE COUNTER LOCATIONS IN RAM 170 | |
| 204 — INITIALIZE TIMER 140 | T2 |
| 206 — INITIALIZE QUALIFICATION LOGIC LATCH 40 | |
| 208 — START ANALYZED MICROPROCESSOR 10 | T3 |
| 210 — START TIMER 140 | |
| 212 — ENABLE ARBITER 50 | T4 |
| 214 — RETURN TO WAIT LOOP | T5 |

TO BLOCK 216 (FIG. 2B)

FIG. 2A

0 228 242

FROM BLOCK 214 (FIG. 2A)

216 — TIMER 140 INTERRUPTS ANALYZING MICROPROCESSOR 150 AND BEGINS COUNTING AGAIN

T5

218 — READ QUALIFIED ADDRESS FROM LATCH

220 — ENABLE ARBITER 50

T6

222 — INCREMENT COUNT OF ADDRESS OBSERVATIONS

224 — SEARCH FOR RANGE INCLUDING ADDRESS

226 — IF RANGE IS FOUND INCREMENT COUNTER

T7

228 — RETURN TO WAIT LOOP

229 — IS ANALYSIS COMPLETE ?

YES          NO → TO BLOCK 230 (FIG. 2C)

FIG. 2B

FROM BLOCK 229 (FIG.2B)

230 DISABLE TIMER 140

240 POST PROCESS
OBSERVATIONS
FOR DISPLAY

250 DISPLAY RESULTS

260 RETURN

T7

# FIG. 2C

0 228 242

- CLEAR COUNTERS IN RAM 170 TO ZERO

- PROGRAM TIMER 140

- PROGRAM QUALIFICATION LOGIC LATCH 40

ANALYZIED MICROPROCESSOR 10 BEGINS EXECUTION OF PROGRAM UNDER TEST

| | T1 | T2 | T3 |
|---|---|---|---|
| ANALYZING MICROPROCESSOR 150 | INITIALIZATION | | |
| TIMER 140 | STOPPED | STOPPED | STOPPED |
| LATCH 60, 70, 80, 90 AND 100 | NOT ACQUIRING | NOT ACQUIRING | NOT ACQUIRING |
| ANALYZING MICROPROCESSOR 10 | STOPPED | STOPPED | EXECUTING PROGRAM UNDER TEST |
| TIME | | | |

## FIG. 3A

FIG. 3B

START TIMER 140
ENABLE ARBITER 50

**ANALYZING MICROPROCESSOR 150**

| | WAITING FOR INTERRUPT · FROM TIMER 140 | READING LATCHES | SEARCH AND INCREMENT | WAITING FOR INTERRUPT FROM TIMER 140 |

INTERRUPT ANALYZING MICROPROCESSOR 150 AND BEGIN COUNTING AGAIN

**TIMER 140** — COUNTING — COUNTING

**LATCH 60,70,80, 90 AND 100**

NOT ACQUIR-ING | ACQUIRING QUALIFIED ADDRESSES | HOLDING LAST ACQUIRED ADDRESS | ACQUIRING QUALIFIED ADDRESSES

**ANALYZED MICROPROCESSOR 10** — EXECUTING PROGRAM UNDER TEST

TIME — T3 | T4 | T5 | T6 | T7

0 228 242

FIG. 4